# EUROPEAN PATENT APPLICATION

(11) **EP 4 496 251 A1**
(43) Date of publication of application: **22.01.2025**
(21) Application number: 23769925.1
(22) Date of filing: 17.03.2023
(51) Int. Cl.: H04L 5/00, H04W 52/02, H04W 68/00

(54) **REFERENCE SIGNAL DETERMINATION METHOD AND APPARATUS, AND TERMINAL**

(30) Priority: 17.03.2022 CN 202210263085
(71) Applicant: Spreadtrum Communications (Shanghai) Co., Ltd., Shanghai 201203 (CN)
(72) Inventor: ZHOU, Huayu, Shanghai 201203 (CN); LEI, Zhenzhu, Shanghai 201203 (CN); ZHAO, Sicong, Shanghai 201203 (CN); PAN, Zhengang, Shanghai 201203 (CN)
(74) Representative: Mewburn Ellis LLP
(86) International application number: PCT/CN2023/082256
(87) International publication number: WO 2023/174423

(57) **Abstract**

A method and apparatus for determining a reference signal (RS) and a terminal are provided in the disclosure. The method includes: determining that an RS is valid according to a cell switch indication and/or an RS valid indication. Therefore, the terminal device can determine that the RS is valid according to the cell switch indication and/or the RS valid indication, which is conducive to ensuring downlink timing/frequency synchronization.

## Description

### TECHNICAL FIELD

Embodiments of the disclosure relate to the field of communications, and in particular, to a method and apparatus for determining a reference signal and a terminal.

### BACKGROUND

At present, reference signals (RSs) are introduced in the standard protocol specified by the 3rd generation partnership project (3GPP).

An RS can be used to perform timing/frequency tracking for a cell, so as to realize downlink (DL) timing/frequency synchronization for the cell. However, with regard to how to determine that an RS is valid, further research is required.

### SUMMARY

In a first aspect, a method for determining a reference signal (RS) is provided in the disclosure. The method includes determining that an RS is valid according to a cell switch indication and/or an RS valid indication.

As can be seen, in the disclosure, a terminal can determine that the RS is valid according to the cell switch indication and/or the RS valid indication, which is conducive to ensuring downlink (DL) timing/frequency synchronization.

As such, the cell switch indication is used to instruct the terminal to initiate random access (RA) in a cell and incidentally indicate that the RS is valid; or the cell switch indication is used to instruct the terminal to initiate RA in a cell, and the RS valid indication is used to indicate that the RS is valid.

In some possible implementations, the method further includes obtaining the cell switch indication and/or the RS valid indication.

In a second aspect, a method for determining an RS is provided in the disclosure. The method includes determining that an RS is valid according to a first indication.

As can be seen, in the disclosure, the terminal can determine that the RS is valid according to the first indication, which is conducive to ensuring DL timing/frequency synchronization.

In some possible implementations, the method further includes obtaining the first indication.

In some possible implementations, the first indication is at least one of the cell switch indication, an uplink (UL) switch indication, or the RS valid indication.

As such, the cell switch indication or the UL switch indication is used to instruct the terminal to send a physical random access channel (PRACH) in a cell (the PRACH is sent to obtain UL synchronization with the cell to use UL resources in the cell), and incidentally indicates that the RS is valid (in order for faster DL synchronization); or the cell switch indication or the UL switch indication is used to instruct the terminal to initiate RA in the cell, and the RS valid indication is used to indicate that the RS is valid.

In a third aspect, an apparatus for determining an RS is provided in the disclosure. The apparatus includes a determining unit configured to determine that an RS is valid according to a cell switch indication and/or an RS valid indication.

In a fourth aspect, an apparatus for determining an RS is provided in the disclosure. The apparatus includes a determining unit configured to determine that an RS is valid according to a first indication.

In a fifth aspect, the steps of the method designed in the first aspect is applied to a terminal.

In a sixth aspect, the steps of the method designed in the second aspect is applied to a terminal.

In a seventh aspect, a terminal is provided in the disclosure. The terminal includes a processor, a memory, and computer programs or instructions stored in the memory. The processor is configured to execute the computer programs or instructions to implement the steps of the method designed in the first aspect or the second aspect.

In an eighth aspect, a chip is provided in the disclosure. The chip includes a processor configured to execute the steps of the method designed in the first aspect or the second aspect.

In a ninth aspect, a chip module is provided in the disclosure. The chip module includes a transceiving module and a chip. The chip includes a processor. The processor is configured to execute the steps of the method designed in the first aspect or the second aspect.

In a tenth aspect, a computer-readable storage medium is provided in the disclosure. The storage medium stores computer programs or instructions. The computer programs or instructions are executed to implement the steps of the method designed in the first aspect or the second aspect.

In an eleventh aspect, a computer program product is provided in the disclosure. The computer program product includes computer programs or instructions. The computer programs or instructions are executed to implement the steps of the method designed in the first aspect or the second aspect.

For the beneficial effects generated by the technical solutions in the third aspect to the eleventh aspect, reference can be made to the beneficial effects generated by the technical solutions in the first aspect or the second aspect

### BRIEF DESCRIPTION OF THE DRAWINGS

To describe technical solutions in embodiments of the disclosure more clearly, the following will briefly introduce accompanying drawings required for describing the embodiments or the related art.
FIG. 1 is a schematic diagram of an architecture of a wireless communication system according to embodiments of the disclosure.
FIG. 2 is a schematic flow chart of a method for determining a reference signal (RS) according to embodiments of the disclosure;
FIG. 3 is a schematic flow chart of another method for determining an RS according to embodiments of the disclosure.
FIG. 4 is a block diagram illustrating functional units of an apparatus for determining a resource according to embodiments of the disclosure.
FIG. 5 is a block diagram illustrating functional units of another apparatus for determining a resource according to embodiments of the disclosure.
FIG. 6 is a schematic structural diagram of a terminal according to embodiments of the disclosure.
FIG. 7 is a schematic structural diagram of another terminal according to embodiments of the disclosure.

### DETAILED DESCRIPTION

It is to be understood that the terms "first", "second", and the like in the embodiments of the disclosure are used to distinguish different objects, and are not used to describe a particular sequence or order. In addition, the terms "include", "comprise", and "have" as well as variations thereof are intended to cover non-exclusive inclusion. For example, a process, method, software, product, or device including a series of steps or units is not limited to the listed steps or units, and instead, it can optionally include other steps or units that are not listed or other steps or units inherent to the process, method, product, or device.

The term "embodiment" referred to in embodiments of the disclosure means that a particular feature, structure, or characteristic described in conjunction with the embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

The term "at least one" in embodiments of the disclosure refers to one or multiple, and the "multiple" refers to two or more.

The term "and/or" in embodiments of the disclosure describes an association relationship between associated objects, and indicates that there may be three relationships, for example, *A* and/or *B* may mean *A* alone, both *A* and *B* exist, and *B* alone. *A* and *B* each may be a singular from or a plural form. The character "/" herein can indicate that the associated objects are in an "or" relationship. In addition, the symbol "j" may represent a divisor, i. e., perform a division operation.

The term "at least one (item) of" or the like in embodiments of the disclosure refers to any combination of these items, including any combination of a single item or multiple items. For example, at least one (item) of *a, b,* or *c* can represent the following seven cases: *a; b; c*; *a* and *b*; *a* and *c*; *b* and *c*; *a, b,* and *c*. *a, b,* and *c* each may be an element or a set including one or more elements.

The term "equal to" in the embodiments of the disclosure may be used in parallel with "greater than" or "larger than", and is applicable to a technical solution used in case of "greater than" or "larger than", and may be used in parallel with "less than" or "smaller than", and is applicable to a technical solution used in case of "less than" or "smaller than". In the case where "equal to" is used in parallel with "greater than" or "larger than", "equal to" is not used in parallel with "less than" or "smaller than". In the case where "equal to" is used in parallel with "less than" or "smaller than", "equal to" is not used in parallel with "greater than" or "larger than".

The terms "of', "corresponding", "relevant", and "indicated" may sometimes be used in a mixed manner. It may be noted that, these terms express the same meaning in the case where distinction is not emphasized.

The term "connection" or "coupling" in the embodiments of the disclosure refers to various connection manners, such as direct connection (or coupling) or indirect connection (or coupling), so as to implement communication between devices, which is not limited herein.

The terms "network" and "system" in the embodiments of the disclosure can be expressed as the same concept, and a communication system is a communication network.

### 1. Wireless communication system, terminal, and network device

### 1) Wireless communication system

The technical solutions of the embodiments of the disclosure may be applied to various wireless communication systems, for example, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved system of the NR system, an LTE-based access to unlicensed spectrum (LTE-U) system, and an NR-based access to unlicensed spectrum (NR-U) system, a non-terrestrial network (NTN) system, a universal mobile telecommunication system (UMTS), a wireless local area networks (WLAN), wireless fidelity (Wi-Fi), the 6th-generation (6G) communication system, or other communication systems.

It may be noted that, a conventional communication system generally supports a limited number (quantity) of connections and therefore is easy to implement. However, with development of communication technology, not only conventional wireless communication system can be supported, but also, for example, device to device (D2D) communication, machine to machine (M2M) communication, machine type communication (MTC), vehicle to vehicle (V2V) communication, vehicle to everything (V2X) communication, or narrow band internet of things (NB-IoT), etc., can be supported. Therefore, the embodiments of the disclosure can also be applied to these communication systems.

In addition, the technical solutions of the embodiments of the disclosure may be applied to beamforming, carrier aggregation (CA), dual connectivity (DC), or standalone (SA) scenario, etc.

In the embodiments of the disclosure, a spectrum used for communication between a terminal and a network device or a spectrum used for communication between terminals may be a licensed spectrum, or may be an unlicensed spectrum, which is not limited herein. It may be noted that, an unlicensed spectrum may be understood as a shared spectrum, and a licensed spectrum may be understood as a non-shared spectrum.

Since the embodiments of the disclosure are described in conjunction with a terminal and a network device, the terminal and network device involved in the disclosure will be described in detail below.

### 2) Terminal

In the embodiments of the disclosure, the terminal may be a device having a transceiving function, and may be referred to as a user equipment (UE), a remote UE, a relay UE, an access terminal, a subscriber unit, a subscriber station, a mobile station, a remote station, a mobile device, a user terminal, a smart terminal, a wireless communication device, a user agent, or a user apparatus.

It may be noted that, a relay device is a terminal capable of providing a relay forwarding service(s) for other terminals (including a remote terminal).

In the embodiments of the disclosure, the terminal may also be referred to as a cellular phone, a cordless phone, a session initiation protocol (SIP) phone, a wireless local loop (WLL) station, a personal digital assistant (PDA), a device having a wireless communication function such as a handheld device, a computing device or other processing devices coupled to a wireless modem, a vehicle-mounted device, or a wearable device, or referred to as a terminal in a next generation communication system (e. g., an NR communication system, a 6G communication system), or a terminal in a future evolved public land mobile network (PLMN), etc., which is not specifically limited.

In the embodiments of the disclosure, the terminal may be a mobile phone, a pad, a computer with wireless transceiving functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

In the embodiments of the disclosure, the terminal may be deployed on land, which includes indoor or outdoor, handheld, wearable, or in-vehicle. The terminal may be deployed on water (such as ships, etc.). The terminal may be deployed in the air (such as airplanes, balloons, satellites, etc.).

In the embodiments of the disclosure, the terminal may include a device having a wireless communication function, such as a chip system, a chip, and a chip module. The chip system may include a chip, and may also include other discrete components.

### 3) Network device

In the embodiments of the disclosure, the network device may be a device having a transceiving function, may be a device used for communicating with a terminal(s), and is responsible for radio resource management (RRM), quality of service (QoS) management, data compression and encryption, data transceiving, etc., at an air interface side

In the embodiments of the disclosure, the network device may be a base station (BS) in a communication system or a device deployed in a radio access network (RAN) for providing a wireless communication function.

For example, the network device may be a base transceiver station (BTS) in a GSM or CDMA communication system, a node B (NB) in a WCDMA communication system, an evolved node B (eNB or eNodeB) in an LTE communication system, a next generation evolved node B (ng-eNB) in an NR communication system, a next generation node B (gNB) in an NR communication system, a master node (MN) in a DC architecture, a secondary node (SN) in a DC architecture, which is not specifically limited.

In the embodiments of the disclosure, the network device may be other devices in a core network (CN), such as an access and mobility management function (AMF), a user plane function (UPF), etc.; or may be an access point (AP) or a relay station in a WLAN, a communication device in a future evolved PLMN network, a communication device in an NTN network, and the like.

In the embodiments of the disclosure, the network device may include a device having a wireless communication function, such as a chip system, a chip, and a chip module. The chip system may include a chip, and may also include other discrete components.

In the embodiments of the disclosure, the network device may also communicate with an Internet Protocol (IP) network, for example, the internet, a private IP network, or other data network, etc.

In the embodiments of the disclosure, the network device may be an independent node to implement all the functions of the base station, and may include a centralized unit (CU) and distributed units (DU), such as a gNB-CU and a gNB-DU; and may further include an active antenna unit (AAU). The CU may implement a part of functions of the network device, and the DU may also implement a part of functions of the network device. For example, the CU is responsible for processing a non-real time protocol and service, and implements functions of a radio resource control (RRC) layer, a service data adaptation protocol (SDAP) layer, and a packet data convergence protocol (PDCP) layer. The DU is responsible for processing a physical layer protocol and a real-time service, and implements functions of a radio link control (RLC) layer, a medium access control (MAC) layer and a physical (PHY) layer. In addition, the AAU may implement part of processing function of the PHY layer, radio frequency processing, and related functions of the AAU. Since the information of the RRC layer will eventually become the information of the PHY layer or be converted from the information of the PHY layer, in the network deployment, higher layer signaling (e. g., RRC signaling) can be considered to be sent by the DU, or sent by the DU and the AU together. It may be understood that, the network device may include at least one of a CU, a DU, and an AAU. In addition, the CU may be classified as a network device in a radio access network (RAN), or a network device in the CN, which is not specifically limited herein.

In the embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Alternatively, the network device may be a base station deployed on land or water.

In the embodiments of the disclosure, the network device may provide a communication service for terminals within a coverage range of a cell. The cell may include a macro cell, a small cell, a metro cell, a micro cell, a pico cell, and a femto cell.

### 4) Illustration of examples

The following will exemplarily illustrate a wireless communication system in the embodiments of the disclosure.

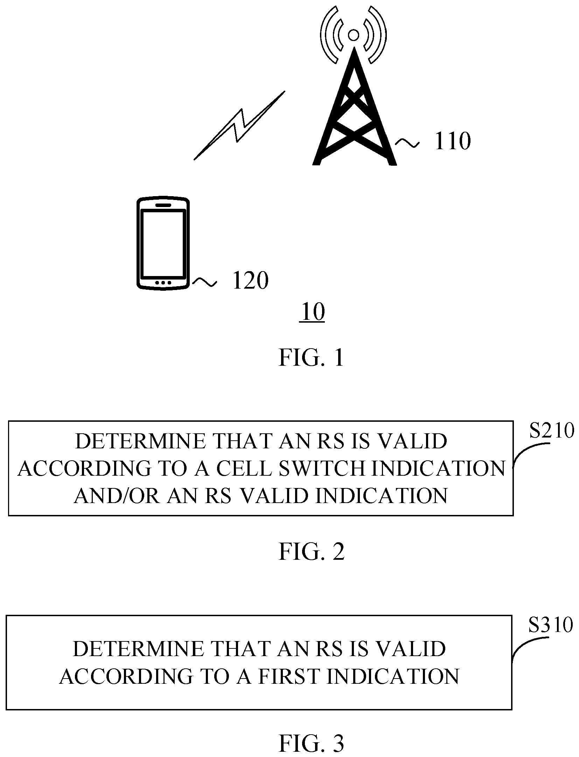

Exemplarily, for a network architecture of a wireless communication system in the embodiments of the disclosure, reference may be made to FIG. 1. As illustrated in FIG. 1, the wireless communication system 10 may include a network device 110 and a terminal 120. The network device 110 and the terminal 120 may communicate wirelessly.

FIG. 1 only illustrates an example of a network architecture of a wireless communication system, and does not construct a limitation on the network architecture of the communication system in the embodiments of the disclosure. For example, in the embodiments of the disclosure, the wireless communication system may further include a server or other devices. Further for example, in the embodiments of the disclosure, the wireless communication system may include multiple network devices and/or multiple terminals.

### 2. Network energy (power) saving

Network energy (power) saving is a concern of operators and equipment suppliers, and it is beneficial to reduce operation costs and to protect the environment. In the fifth generation (5G) network, since there are a lot of spectrum resources, such as bands of 1GHz, 2GHz, 4GHz, 6GHz and 26GHz, carriers or cells corresponding to some bands (such as 4GHz, 6GHz or 26GHz) can be switched off as much as possible when the network load is relatively low, and switched on as required, thereby achieving the purpose of network energy (power) saving.

That is to say, when the network load is relatively low, some carriers or cells do not need to carry data. Generally, the purpose of network energy (power) saving can be achieved by switching on or off some carriers, but can be achieved only when the network load is relatively low.

### 3. Non-anchor cell and anchor cell

A cell or carrier that needs to be switched on or switched off may be referred to as a non-anchor cell or a non-anchor carrier, or referred to as a second-type cell or a second-type carrier, or referred to as a secondary cell (SCell), a secondary carrier, or a secondary carrier component (SCC).

Correspondingly, a cell or carrier that does not need to be switched off may be referred to as an anchor cell or anchor carrier, or referred to as a first-type cell or first-type carrier, or referred to as a primary cell (PCell), a primary carrier, or a primary carrier component (PCC).

It may be noted that, in the embodiments of the disclosure, an anchor cell is mainly used to represent an anchor carrier or an anchor cell, and a non-anchor cell is used to represent a non-anchor carrier or a non-anchor cell.

Generally, a serving cell or a source cell may be used to represent an anchor cell, and a non-serving cell or a target cell may be used to represent a non-anchor cell. For a given UE, a serving cell or source cell prior to switching is an anchor cell, and thus the anchor cell may be the serving cell or source cell. Since a non-serving cell or target cell that is the target of switching is a non-anchor cell, the non-anchor cell may be the target cell. The anchor cell and the non-anchor cell may belong to the same base station or different base stations. When the anchor cell and the non-anchor cell belong to the same base station, the anchor cell may be a PCell or a PCC, and the non-anchor cell may be an SCell or an SCC.

### 4. The terminal initiates random access (RA) in an anchor cell or a non-anchor cell

### 1) The terminal is in an idle state or an inactive state

In an idle state or an inactive state, the terminal may initiate RA in the anchor cell, and therefore, the anchor cell may have resources of a random access channel (random access channel, RACH).

The RACH includes a physical random access channel (PRACH), a random access response (RAR), message 3 (Msg3), message 4 (Msg4), and the like. The PRACH may also be referred to as message 1 (Msg1). The RAR may also be referred to as message 2 (Msg2).

In order to save network energy (power), the non-anchor cell may be switched on as required. If the non-anchor cell is required to be switched on before the terminal initiates RA, the terminal in an idle state or an inactive state can initiate RA in the non-anchor cell and use RACH resources in the non-anchor cell, so as to access/switch to the non-anchor cell.

If the non-anchor cell is required to be switched on after the terminal initiates RA, the terminal in an idle state or an inactive state can initiate RA in the anchor cell, so as to access/switch to the non-anchor cell.

Generally, the terminal that camps on the anchor cell can receive paging, system information (SI), a synchronization signal/physical broadcast channel (PBCH) block (SSB), downlink control information (DCI) and the like.

Since the terminal can initiate RA in the non-anchor cell, a load on the anchor cell can be shared by accessing the non-anchor cell, and thus a handover (HO) process between different cells can be omitted.

In addition, the network device can instruct the terminal to initiate RA in the non-anchor cell according to current load conditions of the anchor cell and the non-anchor cell, which is applicable to a mobile terminated service, i.e., a case that the network device needs to transmit data to the terminal.

The terminal can also autonomously initiate RA in the non-anchor cell, which is applicable to a mobile originated (MO) service, i.e., a case that the terminal needs to transmit data to the network device.

### 2) The terminal is in a connected state

In a connected state, the network device can configure the non-anchor cell as an SCell or a PSCell through CA and DC, so that the terminal can use resources in the anchor cell.

In this case, operations on the non-anchor cell may be understood as addition, deletion, modification, activation, and deactivation of an SCell/PSCcell in CA or DC.

In addition, the anchor cell and the non-anchor cell may not belong to the CA/DC architecture, but belong to an architecture simpler than the CA or DC architecture, which has a relatively low requirement for backhaul, and do not require the terminal to receive signals of multiple carriers at the same time, and thus is easier to implement.

In order to achieve network energy (power) saving, the non-anchor cell is switched on as required. For CA or DC, the network device may switch on the non-anchor cell by activation of the SCell and switch off the non-anchor cell by deactivation of the SCell.

However, the CA/DC architecture has certain limitations. For example, the terminal needs to have predefined CA/DC capabilities, including a frequency band where an SCell supported by the terminal is located, the number of SCells supported by the terminal, and the like. However, these predefined CA/DC capabilities require that the terminal have a capability of enabling multiple radio frequencies (RFs) and/or baseband, resulting in relatively great limitation.

A more flexible approach is to not use the CA/DC architecture, that is to say, the terminal may not have the capability to enable multiple RFs and/or baseband simultaneously, but the terminal can still use the non-anchor cell. Even if the terminal only has the capability to enable one RF and base band at the same time (i. e., can only process a single carrier), the terminal can still use the non-anchor cell.

At present, due to the requirement of uplink (UL) services, it is an important requirement that the terminal can quickly switch to the non-anchor cell for UL transmission. In order to quickly perform UL transmission for the non-anchor cell, the terminal needs to achieve UL timing/frequency synchronization with the non-anchor cell, and therefore the terminal needs to initiate RA.

### 5. The terminal requires a reference signal (RS) in the non-anchor cell

The SSB may be used by the terminal to perform downlink (DL) timing/frequency synchronization, and acquire a master information block (MIB) and a system information block (SIB).

The anchor cell may carry the MIB and the SIB to support cell search and transmission of system information (SI).

Since the non-anchor cell may still need to support paging, RA, RRM measurement, etc., the non-anchor cell still needs to carry the SSB, so as to support the terminal to perform time/frequency tracking and RRM measurement.

Since the non-anchor cell is used for data load balancing and does not need to carry the MIB and the SIB, the non-anchor cell may or may not send the SSB.

In the case where the non-anchor cell sends the SSB, the non-anchor cell may be considered to be capable of being detected by the terminal or being discovered by the terminal. In this case, in order to reduce resource overhead in the non-anchor cell, the SSB in the non-anchor cell may be simplified, for example, the SSB is long-periodic.

In the case where the non-anchor cell does not send the SSB, the non-anchor cell may be regarded as being undetectable by the terminal or being undiscoverable by the terminal.

In addition, in the case where the non-anchor cell does not send the SSB, before or during RA initiated in the non-anchor cell, the terminal still needs an RS in the non-anchor cell to perform time/frequency tracking for the non-anchor cell. This is because the anchor cell and the non-anchor cell may not be in complete DL timing/frequency synchronization, and particularly, in the case where the anchor cell and the non-anchor cell are in non-collocated deployment, DL timing/frequency synchronization of the terminal with the anchor cell cannot be directly applied to the non-anchor cell.

In the case where the anchor cell sends a simplified SSB (for example, a long-periodic SSB), before or during RA initiated in the non-anchor cell, the terminal still needs the RS in the non-anchor cell to perform further timing/frequency tracking for the non-anchor cell, so as to obtain finer DL timing/frequency synchronization. This is because the anchor cell and the non-anchor cell may not be in complete DL timing/frequency synchronization, and particularly, in the case where the anchor cell and the non-anchor cell are in non-collocated deployment, although the terminal has preliminary DL timing/frequency synchronization with the non-anchor cell, the terminal still needs to have further DL timing/frequency synchronization with the non-anchor cell.

### 6. How to determine that an RS is valid

In order to ensure DL timing/frequency synchronization and measurement and the like, in the embodiments of the disclosure, whether an RS is valid needs to be determined. In this regard, the embodiments of the disclosure will be described in detail below.

### Case 1

When the terminal is in an idle state or an inactive state, for how the terminal determines that an RS in the non-anchor cell is valid, the following will illustrated involved related solutions in detail below.

Scheme 1-1: the network device instructs the terminal to initiate RA in the non-anchor cell.

It may be noted that, when the terminal camps on the anchor cell, the terminal can receive an SSB, paging, SI, and the like. These signals/information may be referred to as common control signals/signaling, or broadcast control signals/signaling.

In a specific implementation, the network device may send a cell switch indication and/or an RS valid indication, and the cell switch indication and/or the RS valid indication may be used to determine that the RS is valid.

In the embodiments of the disclosure, the cell may also be referred to as a carrier, and therefore, the cell switch indication may be referred to as a carrier switch indication.

Correspondingly, the terminal can acquire the cell switch indication and/or the RS valid indication, and determine that the RS is valid according to the cell switch indication and/or the RS valid indication.

Detailed illustration will be given below.

### 1) Cell switch indication

### 1. Meaning

For the network device, the network device can instruct, according to current load conditions of the anchor cell and the non-anchor cell, the terminal to initiate RA in the non-anchor cell, and the indication may be implemented by means of the cell switch indication.

That is, the cell switch indication may be used to instruct the terminal to initiate RA in the non-anchor cell.

Certainly, the cell switch indication may also be referred to as other terms, and the other terms are all within the scope of protection of the disclosure as long as they have the same functions/meanings/explanations, etc.

Additionally, the cell switch indication may also be used to indicate that the RS is valid.

For the terminal, the terminal can obtain the cell switch indication, and determine that the RS is valid according to the cell switch indication.

It can be seen that, the network device can send the cell switch indication to instruct the terminal to initiate RA in the non-anchor cell, and incidentally indicate that the RS is valid.

### 2. Implementation of the cell switch indication

The cell switch indication may be implemented as follows.

One manner is that the cell switch indication may be carried in a paging physical down control channel (PDCCH), that is, the cell switch indication may be a bit in the paging PDCCH.

It may be understood that, since the network device can page the terminal in an idle state or an inactive state, the paging PDCCH may carry the cell switch indication to implement transmission of the cell switch indication.

In this way, in an idle state or an inactive state, the terminal can use the RS as early as possible after receiving the paging PDCCH.

One manner is that the cell switch indication may be carried in a paging message, that is, the cell switch indication may be a field in the paging message.

It may be understood that, since the network device can page the terminal in an idle state or an inactive state, the paging message may carry the cell switch indication to implement transmission of the cell switch indication.

In this way, in an idle state or an inactive state, the terminal can use the RS as soon as possible after receiving the paging message, and the network device can adopt different paging schemes for different terminals.

One manner is that the cell switch indication may be carried in an RAR PDCCH, that is, the cell switch indication may be a bit in the RAR PDCCH.

It may be understood that, since the terminal in an idle state or an inactive state can initiate RA, the RAR PDCCH may carry the cell switch indication to implement transmission of the cell switch indication. The RAR PDCCH may also be referred to as a PDCCH in a Type2-PDCCH common search space set (CSS set).

In this way, in an idle state or an inactive state, the terminal can use the RS as early as possible after receiving the RAR PDCCH.

One manner is that the cell switch indication may be carried in a RAR medium access control control element (MAC CE), that is, the cell switch indication may be a field in the RAR MAC CE.

It may be understood that, since the terminal in an idle state or an inactive state can initiate RA, the RAR MAC CE may carry the cell switch indication to implement transmission of the cell switch indication.

In this way, in an idle state or an inactive state, the terminal can use the RS as soon as possible after receiving the RAR MAC CE, and the network device can adopt different response schemes for different terminals.

One manner is that the cell switch indication may be carried in an RAR message, that is, the cell switch indication may be a field in the RAR message.

It may be understood that, since the terminal in an idle state or an inactive state may initiate RA, the RAR message may carry the cell switch indication to implement transmission of the cell switch indication.

In this way, in an idle state or an inactive state, the terminal can use the RS as soon as possible after receiving an RAR message, and the network device can adopt different response schemes for different terminals.

One manner is that the cell switch indication may be carried in an SIB, that is, the cell switch indication may be a field in the SIB.

It may be understood that, because the network device can broadcast the SIB, and the terminal in an idle state or an inactive state can receive the SIB, the SIB may carry the cell switch indication to implement transmission of the cell switch indication.

In this way, the network device may notify, in a broadcast manner, all terminals for the anchor cell to adopt the same strategy, which is also applicable to a mobile originated service, that is, a case that the terminal actively sends data to the network device.

### 1) RS valid indication

### 1. Meaning

For the network device, the network device can directly indicate that the RS is valid, that is, the indication may be implemented by means of the RS valid indication.

That is, the RS valid indication may indicate that the RS is valid.

Certainly, the RS valid indication may also be referred to as other terms, and the other terms are all within the scope of protection of the disclosure as long as they have the same functions/meanings/explanations, etc.

For the terminal, the terminal can obtain the RS valid indication, and determine that the RS is valid according to the RS valid indication.

It may be seen that, the network device can send the RS valid indication to indicate that the RS is valid.

### 2. Implementation of the RS valid indication

The RS valid indication may be implemented as follows.

One manner is that the RS valid indication may be carried in a paging PDCCH, that is, the RS valid indication may be a bit in the paging PDCCH.

It may be understood that, because the network device can page the terminal in an idle state or an inactive state, the paging PDCCH may carry the RS valid indication to implement transmission of the RS valid indication.

In this way, in an idle state or an inactive state, the terminal can use the RS as early as possible after receiving the paging PDCCH.

One manner is that the RS valid indication may be carried in a paging message, that is, the RS valid indication may be a field in the paging message.

It may be understood that, in the anchor cell, since the network device can page the terminal in an idle state or an inactive state, the paging message may carry the RS valid indication to implement transmission of the RS valid indication.

In this way, in an idle state or an inactive state, the terminal can use the RS as soon as possible after receiving the paging message, and the network device can adopt different paging schemes for different terminals.

One manner is that the RS valid indication may be carried in an RAR PDCCH, that is, the RS valid indication may be a bit in the RAR PDCCH.

It may be understood that, since the terminal in an idle state or an inactive state can initiate RA in the anchor cell, the RAR PDCCH may carry the RS valid indication to implement transmission of the RS valid indication. The RAR PDCCH may also be referred to as a PDCCH in a Type2-PDCCH CSS set.

In this way, in an idle state or an inactive state, the terminal can use the RS as early as possible after receiving the RAR PDCCH.

One manner is that the RS valid indication may be carried in a RAR MAC CE, that is, the RS valid indication may be a field in the RAR MAC CE.

It may be understood that, since the terminal in an idle state or an inactive state can initiate RA in the anchor cell, the RAR MAC CE may carry the RS valid indication to implement transmission of the RS valid indication.

In this way, in an idle state or an inactive state, the terminal can use the RS as soon as possible after receiving the RAR MAC CE, and the network device can adopt different response schemes for different terminals.

One manner is that the RS valid indication may be carried in an RAR message, that is, the RS valid indication may be a field in the RAR message.

It may be understood that, since the terminal in an idle state or an inactive state may initiate RA in the anchor cell, the RAR message may carry the RS valid indication to implement transmission of the RS valid indication.

In this way, in an idle state or an inactive state, the terminal can use the RS as soon as possible after receiving the RAR message, and the network device can adopt different response schemes for different terminals. The RAR message is also referred to as message 2.

One manner is that the RS valid indication may be carried in message 4, that is, the RS valid indication may be a field in message 4.

It may be understood that, since the terminal in an idle state or an inactive state can initiate RA in the anchor cell, message 4 may carry the RS valid indication to implement transmission of the RS valid indication.

In this way, in an idle state or an inactive state, the terminal can use the RS as soon as possible after receiving message 4.

One manner is that the RS valid indication may be carried in an SIB, that is, the RS valid indication may be a field in the SIB.

It may be understood that, in the anchor cell, since the network device can broadcast the SIB, and the terminal in an idle state or an inactive state can receive the SIB, the SIB may carry the RS valid indication to implement transmission of the RS valid indication.

In this way, the network device may notify, in a broadcast manner, all terminals for the anchor cell to adopt the same scheme, which is also applicable to a mobile originated service, that is, a case that the terminal actively sends data to the network device.

### 3) A combination of the cell switch indication and the RS valid indication

In the embodiments of the disclosure, the cell switch indication and the RS valid indication can also be combined, that is, the network device can send the cell switch indication to instruct the terminal to initiate RA in the non-anchor cell, and indicate that the RS is valid by means of the RS valid indication, which is similar to the described content, and will not be described again.

### 4) Wake-up or paging the terminal

It may be noted that, when the terminal is in an idle state or a non-active state, the network device needs to wake up or page the terminal first to send the cell switch indication and/or the RS valid indication.

During specific implementation, the network device can wake up or page the terminal by means of a wakeup signal (WUS), a paging early indication (PEI), a paging PDCCH or a paging message, and then send the cell switch indication to instruct the terminal to initiate RA in the non-anchor cell, and indicates that the RS is valid.

Alternatively, the network device can wake up or page the UE by means of a WUS, a PEI, a paging PDCCH or a paging message, then send the cell switch indication to instruct the terminal to initiate RA in the non-anchor cell, and send the RS valid indication to instruct the terminal that the RS is valid.

That is to say, the network device only sends the cell switch indication and/or the RS valid indication after waking up or paging the terminal, and only after detecting that the terminal itself (possibly) is paged or waken up, the terminal initiates RA in the non-anchor cell, and determines whether the RS is valid.

In conclusion, when a condition is satisfied, the terminal can determine that the RS is valid according to the cell switch indication and/or the RS valid indication, where the condition includes at least one of: a WUS is detected, a PEI is detected, a paging PDCCH is detected, and a paging message is detected to contain an identifier of the terminal.

In some possible implementations, the case that the WUS is detected may include that: a signal corresponding to the WUS or a channel corresponding to the WUS is detected, or an indication in the signal corresponding to the WUS or in the channel corresponding to the WUS (for example, indicating that a terminal group corresponding to a paging occasion (PO) is paged, or a terminal sub-group corresponding to a PO is paged, etc.) is detected.

It may be noted that, the signal corresponding to the WUS may be a sequence, and the channel corresponding to the WUS may be a physical channel, such as a PDCCH. In some possible implementations, the case that the PEI is detected may include that: a signal corresponding to the PEI or a channel corresponding to the PEI is detected, or an indication in the signal corresponding to the PEI or the channel corresponding to the PEI (for example, indicating that a terminal group corresponding to a PO is paged, or a terminal sub-group corresponding to a PO is paged, etc.) is detected.

It may be noted that, the signal corresponding to the PEI may be a sequence, and the channel corresponding to the PEI may be a physical channel, such as a PDCCH.

Scheme 1-2: the network device instructs the terminal to complete RA in the non-anchor cell

Different from the case that the terminal initiates RA in the non-anchor cell in the foregoing "scheme 1-1", when the terminal camps on the anchor cell, the terminal monitors network control information in the anchor cell and initiates RA in the anchor cell. However, the network device can instruct the terminal via the RAR to switch to the non-anchor cell to complete RA.

### 1) Cell switch indication

### 1. Meaning

For the network device, the network device can instruct, according to current load conditions of the anchor cell and the non-anchor cell, the terminal to initiate RA in the non-anchor cell, and instructs via the RAR the terminal to switch to the non-anchor cell to complete RA, where the indication may be implemented by means of the cell switch indication.

That is, the cell switch indication may be used to instruct the terminal to initiate RA in the non-anchor cell, and the RAR may be used to instruct the terminal to switch to the non-anchor cell to complete RA.

Certainly, the cell switch indication may also be referred to as other terms, and the other terms are all within the scope of protection of the disclosure as long as they have the same function.

Additionally, the cell switch indication may also be used to indicate that the RS is valid.

For the terminal, the terminal can obtain the cell switch indication, and determine that the RS is valid according to the cell switch indication.

It may be seen that, the network device can send the cell switch indication to instruct the terminal to initiate RA in the anchor cell, to instruct the terminal to switch to the non-anchor cell to complete RA, and incidentally indicates that the RS is valid.

### 2. Implementation of the cell switch indication

The cell switch indication may be implemented as follows.

One manner is that the cell switch indication may be carried in an RAR PDCCH, that is, the cell switch indication may be a bit in the RAR PDCCH.

It may be understood that, since the terminal in an idle state or inactive state can initiate RA in the anchor cell, the RAR PDCCH may carry the cell switch indication to implement transmission of the cell switch indication.

In this way, in an idle state or an inactive state, the terminal can use the RS as early as possible after receiving the RAR PDCCH.

One manner is that the cell switch indication may be carried in an RAR MAC CE, that is, the cell switch indication may be a field in the RAR MAC CE.

It may be understood that, since the terminal in an idle state or an inactive state can initiate RA in the anchor cell, the RAR MAC CE may carry the cell switch indication to implement transmission of the cell switch indication.

In this way, in an idle state or an inactive state, the terminal can use the RS as soon as possible after receiving the RAR MAC CE, and the network device can adopt different response schemes for different terminals.

One manner is that the cell switch indication may be carried in an RAR message, that is, the cell switch indication may be a field in the RAR message.

It may be understood that, since the terminal in an idle state or an inactive state can initiate RA in the anchor cell, the RAR message may carry the cell switch indication to implement transmission of the cell switch indication.

In this way, in an idle state or an inactive state, the terminal can use the RS as soon as possible after receiving the RAR message, and the network device can adopt different response schemes for different terminals.

One manner is that the cell switch indication may be carried in message 4, that is, the cell switch indication may be a field in message 4.

It may be understood that, since the terminal in an idle state or an inactive state can initiate RA in the anchor cell, message 4 may carry the cell switch indication to implement transmission of the cell switch indication.

In this way, message 4 may be reused for the cell switch indication.

One manner is that the cell switch indication may be carried in an SIB, that is, the cell switch indication may be a field in the SIB.

It may be understood that, since the network device can broadcast the SIB, and the terminal in an idle state or inactive state can receive the SIB, the SIB may carry the cell switch indication to implement transmission of the cell switch indication.

In this way, the network device may notify, in a broadcast manner, all terminals for the anchor cell to adopt the same scheme, which is also applicable to mobile originated service, that is, a case that the terminal actively sends data to the network device.

### 1) RS valid indication

### 1. Meaning

Similar to "scheme 1-1", for the network device, the network device can directly indicate that the RS is valid, and indicates that the RS is valid by means of the RS valid instruction.

That is, the RS valid indication may indicate that the RS is valid. Certainly, the RS valid indication may also be referred to as other terms, and the other terms are all within the scope of protection of the disclosure as long as they have the same function.

For the terminal, the terminal can obtain the RS valid indication, and determine that the RS is valid according to the RS valid indication.

It may be seen that, the network device can send the RS valid indication to indicate that the RS is valid.

### 2. Implementation of the RS valid indication

The RS valid indication may be implemented as follows.

One manner is that the RS valid indication may be carried in an RAR PDCCH, that is, the RS valid indication may be a bit in the RAR PDCCH.

It may be understood that, since the terminal in an idle state or an inactive state can initiate RA in the anchor cell, the RAR PDCCH may carry the RS valid indication to implement transmission of the RS valid indication.

In this way, in an idle state or an inactive state, the terminal can use the RS as early as possible after receiving the RAR PDCCH.

One manner is that the RS valid indication may be carried in an RAR MAC CE, that is, the RS valid indication may be a field in the RAR MAC CE.

It may be understood that, since the terminal in an idle state or an inactive state can initiate RA in the anchor cell, the RAR MAC CE may carry the RS valid indication to implement transmission of the RS valid indication.

In this way, in an idle state or an inactive state, the terminal can use the RS as soon as possible after receiving the RAR MAC CE, and the network device can adopt different response schemes for different terminals.

One manner is that the RS valid indication may be carried in an RAR message, that is, the RS valid indication may be a field in the RAR message.

It may be understood that, since the terminal in an idle state or an inactive state may initiate RA in the anchor cell, the RAR message may carry the RS valid indication to implement transmission of the RS valid indication.

In this way, in an idle state or an inactive state, the terminal can use the RS as soon as possible after receiving the RAR message, and the network device can adopt different response schemes for different terminals.

One manner is that the RS valid indication may be carried in message 4, that is, the RS valid indication may be a field in message 4.

It may be understood that, since the terminal in an idle state or an inactive state can initiate RA in the anchor cell, message 4 may carry the RS valid indication to implement transmission of the RS valid indication.

In this way, message 4 may be reused for the cell switch indication.

One manner is that the RS valid indication may be carried in an SIB, that is, the RS valid indication may be a field in the SIB.

It may be understood that, since the network device can broadcast the SIB, and the terminal in an idle state or an inactive state can receive the SIB, the SIB may carry the RS valid indication to implement transmission of the RS valid indication.

In this way, the network device may notify, in a broadcast manner, all terminals for the anchor cell to adopt the same scheme, which is also applicable to a mobile originated service, that is, a case that the terminal actively sends data to the network device.

### 3) A combination of the cell switch indication and the RS valid indication

In the embodiments of the disclosure, the cell switch indication and the RS valid indication can also be combined, that is, the network device can send the cell switch indication to instruct the terminal to initiate RA in the non-anchor cell, and indicate that the RS is valid by means of the RS valid indication, which is similar to the described content, and will not be described again.

### Scheme 1-3: delay

It may be noted that, before the terminal determines that the RS is valid, the terminal may have a processing delay, and the delay may also be understood as a time delay and the like, which is not specifically limited herein.

Specifically, the delay may exist as follows.

### One is cell switch time

It may be noted that, because a certain delay or time is required for the non-anchor cell from being switched off to being switched on (if the non-anchor cell is already on, the delay may be very small or zero), only after the delay, the terminal can initiate RA to determine whether the RA is valid.

In addition, in order to facilitate distinguishing, the time required by the non-anchor cell from being switched off to being switched on may be referred to as a first delay.

In addition, the first delay may further include time for transmitting control signaling when the anchor cell controls the non-anchor cell to be switched on. In general, the first delay is the cell switch time.

Certainly, the first delay may also be referred to as other terms, and all other terms are within the scope of protection of the disclosure as long as they have the same meaning or function.

Based on this, the terminal may determine that the RS is valid after the first delay.

In addition, the value of the first delay may be as follows.

One is that the value of the first delay may be predefined.

In this way, signaling overhead may be reduced.

One is that the value of the first delay may be carried in an SIB, that is, the value of the first delay may be indicated by a field in the SIB.

In this way, the value of the first delay may be flexibly configured via the SIB, and thus the overhead is relatively low.

One is that the value of the first delay may be carried in at least one of: a WUS, a PEI PDCCH, a paging PDCCH, a paging message, an RAR PDCCH, an RAR MAC CE, an RAR message, or a field in message 4. That is, the value of the first delay may be indicated by at least one of: the WUS, a bit in the PEI PDCCH, a bit in the paging PDCCH, a field in the paging message, a bit in the RAR PDCCH, a field in the RAR MAC CE, the RAR message, or a field in the message 4.

In this way, the network device may adopt different schemes for different terminals to flexibly configure the value of the first delay.

### One is terminal processing time.

The terminal processing time may include a time required for processing at least one of: WUS detection, PEI decoding, paging PDCCH decoding, paging message decoding, RAR PDCCH decoding, RAR MAC CE decoding, RAR message decoding, or message 4 decoding.

In addition, the terminal processing time is related to the terminal processing capability.

It may be noted that, since the terminal needs a certain time for processing the WUS, the PEI, the paging or RA, only after the time, the terminal can initiate RA to determine whether the RS is valid.

In addition, to facilitate distinguishing, the terminal processing time may be referred to as a second delay, that is, the second delay is related to the terminal processing capability.

In some possible implementations, the second delay has different values for different terminal processing capabilities.

For example, in the case where the terminal processing capability is high (i. e., the terminal has powerful capabilities for detecting a WUS, decoding a PEI, decoding a paging PDCCH, decoding a paging message, decoding a RAR PDCCH, decoding a RAR MAC CE, decoding a RAR message, decoding message 4, etc.), the value of the second delay is relatively small. In the case where the terminal processing capability is low, the value of the second delay is relatively large.

Certainly, the second delay may also be referred to as other terms, and the other terms are within the scope of protection of the disclosure as long as they have the same meaning/function/explanation, etc.

Based on this, the terminal can determine that the RS is valid after the second delay.

One is the maximum value between the cell switch time and the terminal processing time.

It may be noted that, the subject corresponding to the cell switch time is the non-anchor cell, and the subject corresponding to the terminal processing time is the terminal. Since the two times correspond to different subjects, respectively, the two times may overlap.

In conjunction with the above, repetition will be omitted.

In addition, in order to facilitate distinguishing, the maximum value between the cell switch time and the terminal processing time may be referred to as a third delay. Certainly, the third delay may also be referred to as other terms, and all other terms are within the scope of protection of the disclosure as long as they have the same meaning/function/explanation, etc.

That is, the third delay is the maximum value between the first delay and the second delay.

One is the sum of the cell switch time and the terminal processing time.

It may be noted that, the cell switch time and the terminal processing time may be non-overlapping in sequence.

In conjunction with the above, repetition will be omitted.

In addition, in order to facilitate distinguishing, the sum of the cell switch time and the terminal processing time may also be referred to as the third delay.

That is, the third delay is the sum of the first delay and the second delay.

In this regard, the terminal may initiate RA after the third delay in order to ensure robustness of the communication system.

### Scheme 1-4: configuration of the RS

It may be noted that, the terminal can determine, according to a higher layer parameter, configuration of the RS in the non-anchor cell.

In some possible implementations, the higher layer parameter may be contained in signaling of a source cell.

It may be noted that, the signaling of the source cell may be signaling of the anchor cell.

In this way, when the terminal obtains SI in the anchor cell, the terminal device can obtain configuration of the RS in the non-anchor cell, which is convenient for implementation.

### Scheme 1-5: Type or characteristic of the RS

The type of the RS may be as follows.

One is that the RS may be an SSB.

In this way, the network device may send the SSB as required.

The characteristic of the SSB may be as follows.

One is that the SSB may take effect only once after indication.

It may be understood that, when the cell switch indication and/or the RS valid indication indicates that the SSB is valid, the SSB only takes effect once subsequently.

In this way, the SSB may be regarded as an aperiodic SSB, so that the overhead is low.

One is that the SSB may be valid for a period of time.

It may be understood that, when the cell switch indication and/or the RS valid indication indicates that the SSB is valid, the SSB is only valid for a period of time that expires.

In this way, the terminal can perform DL timing/frequency synchronization via the SSB in a period of time.

One is that the SSB has the same time domain position as a cell defining SSB (CD-SSB).

In this way, the configuration of the SSB can be simplified, and the SSB is a non-cell defining SSB (NCD-SSB).

One is that the RS may be a tracking reference signal (TRS).

In this way, the network device can send the TRS as required.

The characteristic of the TRS may be as follows.

One is that the TRS may take effect only once after the indication.

In this way, the TRS can be regarded as an aperiodic TRS, and thus the overhead is relatively low.

One is that the TRS may be valid for a period of time.

In this way, the terminal may perform DL timing/frequency synchronization via the TRS in a period of time.

One is that the TS may be a temporary RS (Temp-RS).

The Temp-RS may be an RS used for quick activation of an SCell in an existing system (used for a connected state).

In this way, the network device can send the Temp-RS as required. In the case where the Temp-RS can be used in an idle state/an inactive state, implementation of the terminal can be simplified.

The characteristic of the TRS may be as follows.

One is that the Temp-RS may take effect only once after the indication.

In this way, the Temp-RS can be regarded as an aperiodic Temp-RS, and thus the overhead is relatively small.

One is that the Temp-RS may be valid for a period of time.

In this way, the terminal may perform timing/frequency synchronization via the Temp-RS in a period of time.

One is that the RS may include a part of RSs in the SSB and the TRS.

In this way, the terminal may perform coarse synchronization by using a part of the RSs in the SSB, and perform compensation to limit the residual timing/frequency offset to a certain range, and then perform fine synchronization by using the TRS, thereby further reducing the timing/frequency offset.

In some possible implementations, a part of the RSs in the SSB may be a primary synchronization signal (PSS) and/or a secondary synchronization signal (SSS).

In this way, the terminal device can perform coarse synchronization via the PSS and/or SSS.

It may be noted that, when the PSS is used, inter-cell interference of network deployment can be suppressed by a cell identity (ID) carried in the PSS, When the SSS is used, inter-cell interference of network deployment can be suppressed by a cell ID carried in the SSS. When the PSS and the SSS are used, inter-cell interference of network deployment can be suppressed by the cell ID that the PSS and SSS collectively carry.

In some possible implementations, the TRS may be a TRS within a slot.

It may be noted that, the TRS may be in two slots and have four columns of symbols in total, or may be in only one slot and have two columns of symbols, and thus resource overheads can be reduced by using the TRS in one slot (two columns of symbols).

In some possible implementations, the TRS may be a TRS in two slots.

In this way, the synchronization precision can be improved, or the timing/frequency synchronization can be speeded (under a condition of a certain synchronization precision).

### Case 2

When the terminal is in a connected state, for how the terminal determines that the RS in the non-anchor cell is valid, the following will specifically illustrate involved related schemes.

Scheme 2-1: the network device can instruct the terminal to initiate RA or send a PRACH in the non-anchor cell.

It may be noted that, when the terminal camps on the anchor cell, the terminal can receive paging, SI, an SSB, downlink control information (DCI), and the like, or monitor network control information, and the terminal can initiate RA in the non-anchor cell.

In a specification implementation, the network device can transmit a first indication that may be used to determine that the RS is valid. Correspondingly, the terminal can obtain the first indication, and determine that the RS is valid according to the first indication. Detailed illustration will be given below.

### 1. First indication

### 1). Meaning

It may be noted that the first indication may be at least one of the cell switch indication, an UL switch indication, or the RS valid indication.

Certainly, the first indication may also be referred to as other terms, and the other terms all fall within the scope of protection of the disclosure as long as they have the same function/meaning/concept/explanation, etc.

### 2). Cell switch indication

### a. Meaning

For the network device, the network device can instruct, according to current load conditions of the anchor cell and the non-anchor cell, the terminal to initiate RA or send a PRACH in the non-anchor cell, and the indication may be implemented via the cell switch indication.

That is, the cell switch indication may be used to instruct the terminal to initiate RA in the non-anchor cell, or instruct the terminal to transmit the PRACH in the non-anchor cell.

The PRACH is sent to obtain UL synchronization with the non-anchor cell, so as to use UL resources in the non-anchor cell.

Certainly, the cell switch indication may also be referred to as other terms, and the other terms are all within the scope of protection of the disclosure as long as they have the same function or meaning.

For the terminal, the terminal can obtain the cell switch indication, and determine that the RS is valid according to the cell switch indication.

It may be seen that, the network device can send the cell switch indication to instruct the terminal to initiate RA or send the PRACH in the non-anchor cell, and incidentally indicates that the RS is valid.

### b. Implementation of the cell switch indication

The cell switch indication may be implemented as follows.

One is that the cell switch indication may be carried in a PDCCH, that is, the cell switch indication may be a bit in the PDCCH.

It may be understood that, the terminal in a connected state can receive the PDCCH.

Thus, in the connected state, the terminal can use the RS as early as possible after receiving the PDCCH.

One is that the cell switch indication may be carried in a MAC CE, that is, the cell switch indication may be a MAC CE.

It may be understood that, the terminal in a connected state can receive the MAC CE.

Thus, in the connected state, the terminal can use the RS as early as possible after receiving the MAC CE, and the network device can adopt different response schemes for different terminals.

### 3). UL switch indication

### a. Meaning

For the network device, the network device can instruct, according to current load conditions of the anchor cell and the non-anchor cell, the terminal to initiate RA or send a PRACH in the non-anchor cell, and the indication may be implemented via the UL switch indication.

That is, the UL switch indication may be used to instruct the terminal to switch to a cell or carrier where UL transmission is located.

The PRACH is sent to obtain UL synchronization with the non-anchor cell, so as to use UL resources in the non-anchor cell.

Certainly, the UL switch indication may also be referred to as other terms, and the other terms are all within the scope of protection of the disclosure as long as they have the same function or meaning.

For the terminal, the terminal can obtain the UL switch indication, and determine that the RS is valid according to the UL switch indication.

It may be seen that, the network device can send the UL switch indication to instruct the terminal to initiate RA or send the PRACH in the non-anchor cell, and incidentally indicate that the RS is valid.

### b. Implementation of the UL switch indication

The UL switch indication may be implemented as follows.

One is that the UL switch indication may be carried in a PDCCH, that is, the UL switch indication may be a bit in the PDCCH.

It may be understood that, the terminal in a connected state can receive the PDCCH.

Thus, in the connected state, the terminal can use the RS as early as possible after receiving the PDCCH.

One is that the UL switch indication may be carried in a MAC CE, that is, the UL switch indication may be a MAC CE.

It may be understood that, the terminal in a connected state can receive the MAC CE.

Thus, in the connected state, the terminal can use the RS as early as possible after receiving the MAC CE, and the network device can adopt different response schemes for different terminals.

### 4). RS valid indication

### a. Meaning

For the network device, the network device can directly indicate that the RS is valid, that is, the above indication can be implemented via the RS valid indication.

That is, the RS valid indication may be used to indicate that the RS is valid.

Certainly, the RS valid indication may also be referred to as other terms, and the other terms are all within the scope of protection of the disclosure as long as they have the same function/meaning/explanation, etc.

For the terminal, the terminal can obtain the RS valid indication, and determine that the RS is valid according to the RS valid indication.

It may be seen that, the network device can send the RS valid indication to indicate that the RS is valid.

### b. Implementation of the RS valid indication

The RS valid indication may be implemented as follows.

One is that the RS valid indication may be carried in a PDCCH, that is, the RS valid indication may be a bit in the PDCCH.

It may be understood that, the terminal in a connected state can receive the PDCCH.

Thus, in the connected state, the terminal can use the RS as early as possible after receiving the PDCCH.

One is that the cell switch indication may be carried in a MAC CE.

It may be understood that, the terminal in a connected state can receive the MAC CE.

Thus, in the connected state, the terminal can use the RS as early as possible after receiving the MAC CE, and the network device can adopt different response schemes for different terminals.

### 5) A combination of the cell switch indication/UL switch indication and the RS valid indication

In the embodiments of the disclosure, the cell switch indication/UL switch indication and the RS valid indication can also be combined, that is, the network device can send the cell switch indication/UL switch indication to instruct the terminal to initiate RA or send a PRACH in the non-anchor cell, and indicate that the RS is valid by means of the RS valid indication, which is similar to the described content, and will not be described again.

### Scheme 2-2: delay

It may be noted that, similar to "scheme 1-3", before the terminal determines that the RS is valid, the terminal may have a processing delay, and the delay may also be understood as a time delay and the like, which is not specifically limited herein.

Specifically, the delay may exist as follows.

### One is cell switch time

It may be noted that, since a certain delay or time is required for the non-anchor cell from being switched off to being switched on (if the non-anchor cell is already on, the delay may be very small or zero), only after the delay, the terminal can initiate RA to determine whether the RS is valid.

In addition, in order to facilitate distinguishing, the time required by the non-anchor cell from being switched off to being switched on may be referred to as a first delay.

In addition, the first delay may further include time for transmitting control signaling when the anchor cell controls the non-anchor cell to be switched on. In general, the first delay is the cell switch time.

Certainly, the first delay may also be referred to as other terms, and all other terms are within the scope of protection of the disclosure as long as they have the same meaning/function/explanation/concept, etc.

Based on this, the terminal may determine that the RS is valid after the first delay.

In addition, the value of the first delay may be as follows.

One is that the value of the first delay may be predefined.

In this way, signaling overhead may be reduced.

One is that the value of the first delay may be carried in an SIB, that is, the value of the first delay may be indicated by a field in the SIB.

In this way, the value of the first delay may be flexibly configured via the SIB, and thus the overhead is relatively low.

One is that the value of the first delay may be carried in a PDCCH and/or a MAC CE. That is, the value of the first delay may be indicated by a bit in the PDCCH and/or a field in the MAC CE.

In this way, the network device may adopt different schemes for different terminals to flexibly configure the value of the first delay.

### One is terminal processing time.

The terminal processing time may include a time required for processing PDCCH decoding and/or MAC CE decoding.

In addition, the terminal processing time is related to the terminal processing capability.

It may be noted that, since the terminal needs a certain time to decode the PDCCH and/or MAC CE, only after the time, the terminal can initiate RA to determine whether the RS is valid.

In addition, to facilitate distinguishing, the terminal processing time may be referred to as a second delay, that is, the second delay is related to the terminal processing capability.

In some possible implementations, the second delay has different values for different terminal processing capabilities.

For example, in the case where the terminal processing capability is high (i. e., the terminal has powerful capabilities for detecting a WUS, decoding a PEI, decoding a paging PDCCH, decoding a paging message, decoding a RAR PDCCH, decoding a RAR MAC CE, decoding a RAR message, decoding message 4, etc.), the value of the second delay is relatively small. In the case where the terminal processing capability is low, the value of the second delay is relatively large.

Certainly, the second delay may also be referred to as other terms, and the other terms are within the scope of protection of the disclosure as long as they have the same meaning/function/explanation.

Based on this, the terminal can determine that the RS is valid after the second delay.

One is the maximum value between the cell switch time and the terminal processing time.

It may be noted that, the subject corresponding to the cell switch time is the non-anchor cell, and the subject corresponding to the terminal processing time is the terminal. Since these two times correspond to different subjects, respectively, the two times can overlap.

In conjunction with the above, repetition will be omitted.

In addition, in order to facilitate distinguishing, the maximum value between the cell switch time and delay associated with the terminal processing capability may be referred to as a third delay. Certainly, the third delay may also be referred to as other terms, and all other terms are within the scope of protection of the disclosure as long as they have the same meaning/function/explanation.

That is, the third delay is the maximum value between the first delay and the second delay.

One is the sum of the cell switch time and delay associated with the terminal processing capability.

In conjunction with the above, repetition will be omitted.

In addition, in order to facilitate distinguishing, the sum of the cell switch time and the terminal processing time may also be referred to as the third delay.

That is, the third delay is the sum of the first delay and the second delay.

In this regard, the terminal may initiate RA after the third delay in order to ensure robustness of the communication system.

### Scheme 2-3: configuration of the RS

It may be noted that, the terminal can determine, according to a higher layer parameter, configuration of the RS in the non-anchor cell.

In some possible implementations, the higher layer parameter may be contained in signaling of a source cell.

In this way, when the terminal obtains SI or dedicated RRC configuration information in the anchor cell, the terminal device can obtain configuration of the RS in the non-anchor cell, which is convenient for implementation.

### Scheme 2-4: type or characteristic of the RS

It may be noted that, similar to "scheme 1-5", the RS may be as follows.

One is that the RS may be an SSB.

In this way, the network device can send the SSB as required.

The characteristic of the SSB may be as follows.

One is that the SSB may take effect only once after indication.

It may be appreciated that, when the cell switch indication and/or the RS valid indication indicates that the SSB is valid, the SSB only takes effect once subsequently.

In this way, the SSB may be regarded as an aperiodic SSB, so that the overhead is low.

One is that the SSB may be valid for a period of time.

It may be appreciated that, when the cell switch indication and/or the RS valid indication indicates that the SSB is valid, the SSB is only valid for a period of time that expires.

In this way, the terminal can perform DL timing/frequency synchronization via the SSB in a period of time.

One is that the SSB has the same time domain position as a CD-SSB.

In this way, the configuration of the SSB can be simplified, and the SSB is an NCD-SSB.

One is that the RB may be a TRS.

In this way, the network device can send the TRS as required.

The characteristic of the TRS may be as follows.

One is that the TRS may take effect only once after the indication.

In this way, the TRS can be regarded as an aperiodic TRS, and thus the overhead is relatively low.

One is that the TRS may be valid for a period of time.

In this way, the terminal can perform DL timing/frequency synchronization via the TRS in a period of time.

One is that the TS may be a Temp-RS.

The Temp-RS may be an RS used for quick activation of an SCell in an existing system (used for a connected state).

In this way, the network device can send the Temp-RS as required. In the case where the Temp-RS can be used in an idle state/an inactive state, implementation of the terminal can be simplified.

The characteristic of the TRS may be as follows.

One is that the Temp-RS may take effect only once after the indication.

In this way, the Temp-RS can be regarded as an aperiodic Temp-RS, and thus the overhead is relatively small.

One is that the Temp-RS may be valid for a period of time.

In this way, the terminal can perform timing/frequency synchronization via the Temp-RS in a period of time.

One is that the RS may include a part of RSs in the SSB and the TRS.

In this way, the terminal can perform coarse synchronization by using a part of the RSs in the SSB, and perform compensation to limit the residual timing/frequency offset to a certain range, and then perform fine synchronization by using the TRS, thereby further reducing the timing/frequency offset.

In some possible implementations, a part of the RSs in the SSB may be a PSS and/or an SSS.

In this way, the terminal device can perform coarse synchronization via the PSS and/or SSS.

It may be noted that, when the PSS is used, inter-cell interference of network deployment can be suppressed by a cell identity (ID) carried in the PSS. When the SSS is used, inter-cell interference of network deployment can be suppressed by a cell ID carried in the SSS. When the PSS and the SSS are used, inter-cell interference of network deployment can be suppressed by the cell ID that the PSS and SSS collectively carry.

In some possible implementations, the TRS may be a TRS within a slot.

It may be noted that, the TRS may be in two slots and have four columns of symbols in total, or may be in only one slot and have two columns of symbols, and thus resource overheads can be reduced by using the TRS in one slot (two columns of symbols).

In some possible implementations, the TRS may be a TRS within two slots.

In this way, the synchronization precision can be improved, or the timing/frequency synchronization can be speeded (under a condition of a certain synchronization precision).

### 7. Exemplary illustration of a method for determining an RS

In conclusion, a method for determining an RS according to embodiments of the disclosure is described below by using an example in which a terminal determines that an RS is valid. It may be noted that, in addition to the terminal, an execution subject may be a chip, a chip module, a module, and the like, which is not specifically limited herein.

As illustrated in FIG. 2, which is a schematic flow chart of a method for determining an RS according to embodiments of the disclosure, the method specifically includes the following steps.

S210, an RS is determined to be valid according to a cell switch indication and/or an RS valid indication.

It may be noted that, for "the cell switch indication", "the RS valid indication", "the RS", and "how to determine that the RS is valid", reference may be made to the foregoing illustration in detail, and details are not described herein again.

It may be seen that, in the embodiments of the disclosure, the terminal can determine that the RS is valid according to the cell switch indication and/or the RS valid indication, which is helpful to ensure DL timing/frequency synchronization.

In this way, the network device can send the cell switch indication to instruct the terminal to initiate RA in the non-anchor cell, and incidentally indicates that the RA is valid. Alternatively, the network device can send the cell switch indication to instruct the terminal to initiate RA in the non-anchor cell, and indicate that the RS is valid via the RS valid indication.

In some possible implementations, the method may further include the steps of: the cell switch indication and/or the RS valid indication.

In some possible implementations, the cell switch indication or the RS valid indication is carried in a paging PDCCH.

In this way, the terminal can use the RS as early as possible after receiving the paging PDCCH

In some possible implementations, the cell switch indication or the RS valid indication is carried in a paging message.

In this way, the terminal can use the RS as early as possible after receiving the paging message, and the network device can adopt different schemes for different terminals.

In some possible implementations, the cell switch indication or the RS valid indication is carried in one of: an RAR MAC CE and an RAR message.

In this way, the terminal can use the reference signal as early as possible after receiving the RAR PDCCH.

In some possible implementations, the cell switch indication or the RS valid indication is carried in message 4.

In this way, the terminal can use the RS as early as possible after receiving the RAR MAC CE or RAR message, and the network can adopt different schemes for different terminals.

In some possible implementations, the cell switch indication or the RS valid indication is carried in an SIB.

In this way, the network device can notify, in a broadcast manner, all terminals for the cell to use the same scheme, which is also applicable to an MO service, that is, the case that the terminal actively sends data to the network device.

In some possible implementations, determining that the RS is valid according to the cell switch indication or the RS valid indication may specifically include the following steps: determining that the RS is valid according to the cell switch indication and/or the RS valid indication, in a case where a first condition is satisfied, where the first condition includes one of the following: a WUS is detected, a PEI is detected, a PDCCH is detected, and a paging message is detected to contain its own identifier.

In this way, the network device can wake up or page a terminal by means of a WUS, a PEI, a paging PDCCH, or a paging message, and then send the cell switch indication to instruct the terminal to initiate RA in the non-anchor cell, and incidentally indicate that the RS is valid. Alternatively, the network device may wake up or page the terminal by means of a WUS, a PEI, a paging PDCCH, or a paging message, then sends the cell switch indication to instruct the terminal to initiate RA in the non-anchor cell, and additionally indicates that the RS is valid by means of the RS valid indication.

That is, only when the UE detects that itself (possibly) is paged or awakened, the UE initiates RA in the non-anchor cell and determines whether the RS is valid.

In some possible implementations, the case that the WUS is detected may include that: a signal corresponding to the WUS or a channel corresponding to the WUS is detected, or an indication in the signal corresponding to the WUS or in the channel corresponding to the WUS is detected.

In some possible implementations, the case that the PEI is detected may include that: a signal corresponding to the PEI or a channel corresponding to the PEI is detected, or an indication in the signal corresponding to the PEI or the channel corresponding to the PEI is detected.

In some possible implementations, determining that the RS is valid may specifically include the following steps: determining that the RS is valid after a first delay.

It may be noted that, the terminal can initiate RA and determine whether the RA is valid only after one delay.

In some possible implementations, the value of the first delay is cell switch time.

In this way, since a certain time is required for the non-anchor cell from being switched off to being switched on (if the non-anchor cell is already on, the delay may be very small or zero), the signaling overhead may be reduced.

In some possible implementations, the value of the first delay is predefined or carried in an SIB.

In this way, there may be certain flexibility, and meanwhile, the signaling overhead is small.

In some possible implementations, the value of the first delay is carried in one of: a WUS, a PEI PDCCH, a paging PDCCH, a paging message, an RAR PDCCH, an RAR MAC CE, an RAR message, and a message 4.

In this way, the network device can adopt different schemes for different terminals.

In some possible implementations, determining that the RS is valid may specifically include the following steps: determining that the RS is valid after a second delay.

In some possible implementations, the second delay is terminal processing time.

In some possible implementations, the method can further include the following steps: initiating RA after a third delay, where the third delay is the maximum value between the first delay and the second delay, or the third delay is the sum of the first delay and the second delay.

It may be noted that, in order to achieve robustness, the final delay may be the maximum value between the first delay and the second delay or the sum of the first delay and the second delay.

In some possible implementations, the first delay is the cell switch time, and the second delay is the terminal processing time.

In some possible implementations, the configuration of the RS is determined by a higher layer parameter.

In some possible implementations, the higher layer parameter is contained in signaling of a source cell.

In this way, when the terminal obtains SI in the anchor cell, the terminal can obtain configuration of the RS in the non-anchor cell.

In some possible implementations, the RS takes effect only once after the indication.

In this way, the RS can be regarded as an aperiodic SSB, and thus the overhead is relatively small.

In some possible implementations, the RS is valid for a period of time.

In this way, the terminal may perform timing/frequency synchronization via the SSB in a period of time.

In some possible implementations, the RS is one of an SSB, a TRS, and a Temp-RS.

As such, the network can send one of the SSB, the TRS, and the Temp-RS as required.

In some possible implementations, the SSB has the same time domain position as a CD-SSB

In this way, the configuration of the SSB can be simplified.

In some possible implementations, the RS may include a part of RSs in the SSB and the TRS.

In this way, the terminal can perform coarse synchronization by using a part of the RSs in the SSB, and perform compensation to limit the residual timing/frequency offset to a certain range, and then perform fine synchronization by using the TRS, thereby further reducing the timing/frequency offset.

In some possible implementations, a part of the RSs in the SSB may be a PSS and/or an SSS.

In this way, the terminal device can perform coarse synchronization via the PSS and/or SSS. When the PSS is used, inter-cell interference of network deployment can be suppressed by a cell ID carried in the PSS, When the SSS is used, inter-cell interference of network deployment can be suppressed by a cell ID carried by the SSS. When the PSS and the SSS are used, inter-cell interference of network deployment can be suppressed by the cell ID that the PSS and SSS collectively carry.

In some possible implementations, the TRS may be a TRS within a slot.

It may be noted that, the TRS may be in two slots and have four columns of symbols in total, or may be in only one slot and have two columns of symbols, and thus resource overheads can be reduced by using the TRS in one slot (two columns of symbols).

In some possible implementations, the TRS may be a TRS in two slots.

In this way, the synchronization precision can be improved, or the timing/frequency synchronization can be speeded (under a condition of a certain synchronization precision).

### 8. Exemplary illustration of another method for determining an RS

In conclusion, a method for determining an RS according to embodiments of the disclosure is described below by using an example in which a terminal determines that an RS is valid. It may be noted that, in addition to the terminal, an execution subject may be a chip, a chip module, a module, and the like, which is not specifically limited herein.

As illustrated in FIG. 3, which is a schematic flow chart of a method for determining an RS according to embodiments of the disclosure, the method specifically includes the following steps.

S310, an RS is determined to be valid according to a first indication. It may be noted that, for "the first indication", "the RS", and "how to determine that the RS is valid", reference may be made to the foregoing illustration in detail, and details are not described herein again.

It may be seen that, in the embodiments of the disclosure, the terminal can determine that the RS is valid according to the first indication, which is helpful to ensure DL timing/frequency synchronization.

In some possible implementations, the method may further include the following step: obtaining the first indication.

In some possible implementations, the first indication may include at least one of: a cell switch indication, a UL switch indication, or an RS valid indication.

In this way, the network device can send the cell switch indication or the UL switch indication to instruct the terminal to send a PRACH in the non-anchor cell (the PRACH is sent for obtaining UL synchronization with the non-anchor cell to use UL resources in the non-anchor cell), and incidentally indicates that the RS is valid (for faster DL synchronization). Alternatively, the network device can send the cell switch indication or the UL switch indication to instruct the terminal to initiate RA in the non-anchor cell, and indicates that the RS is valid by means of the RS valid indication.

In some possible implementations, the first indication is carried in a paging PDCCH.

In this way, the terminal can use the RS as early as possible after receiving the PDCCH.

In some possible implementations, the first indication is carried in a MAC CE.

In this way, the terminal can use the RS as early as possible after receiving the MAC CE, and the network device can adopt different schemes for different terminals.

In some possible implementations, determining that the RS is valid may specifically include the following steps: determining that the RS is valid after a first delay.

It may be noted that, the terminal can initiate RA and determine whether the RS is valid only after one delay.

In some possible implementations, the first delay is cell switch time.

As such, a certain amount of time may be required for the non-anchor cell from being switched off to being switched on (if the non-anchor cell has already been on, this delay may be small).

In some possible implementations, the value of the first delay is predefined or carried in an SIB.

In this way, a certain flexibility can be achieved, and the overhead is relatively low.

In some possible implementations, the value of the first delay is carried in a PDCCH or MAC CE.

In this way, the network device can adopt different schemes for different terminals.

In some possible implementations, determining that the RS is valid may specifically include the following steps: determining that the RS is valid after a second delay.

In some possible implementations, the second delay is terminal processing time.

In some possible implementations, the method may further include the following steps: initiating RA after a third delay, where the third delay is the maximum value between the first delay and the second delay, or the third delay is the sum of the first delay and the second delay.

It may be noted that, in order to achieve robustness, the final delay may be the maximum value between the first delay and the second delay or the sum of the first delay and the second delay.

In some possible implementations, the configuration of the RS is determined by a higher layer parameter.

In some possible implementations, the higher layer parameter is contained in signaling of a source cell.

In this way, when the terminal obtains SI or dedicated RRC configuration information in the non-anchor cell, the terminal can obtain the configuration of the RS in the non-anchor cell.

In some possible implementations, the RS takes effect only once after the indication.

In this way, the RS can be regarded as an aperiodic SSB, which results in relatively low overhead.

In some possible implementations, the RS is valid for a period of time.

In this way, the terminal can perform DL timing/frequency synchronization via the SSB in a period of time.

In some possible implementations, the RS is one of an SSB, a TRS, and a Temp-RS.

In this way, the network device can send one of the SSB, the TRS, and the Temp-RS as required.

In some possible implementations, the SSB has the same time domain position as the CD-SSB.

In this way, the configuration of the SSB may be simplified.

In some possible implementations, the RS may include a part of RSs in the SSB and the TRS.

In this way, the terminal may perform coarse synchronization by using a part of the RSs in the SSB, and perform compensation to limit the residual timing/frequency offset to a certain range, and then perform fine synchronization by using the TRS, thereby further reducing the timing/frequency offset.

In some possible implementations, a part of the RSs in the SSB may be a PSS and/or an SSS.

In this way, the terminal device can perform coarse synchronization via the PSS and/or SSS. When the PSS is used, inter-cell interference of network deployment can be suppressed by a cell ID carried in the PSS. When the SSS is used, inter-cell interference of network deployment can be suppressed by a cell ID carried by the SSS. When the PSS and the SSS are used, inter-cell interference of network deployment can be suppressed by the cell ID that the PSS and SSS collectively carry.

In some possible implementations, the TRS may be a TRS in a slot.

It may be noted that, the TRS may be in two slots and have four columns of symbols in total, or may be in only one slot and have two columns of symbols in total, and thus resource overheads can be reduced by using the TRS in one slot (two columns of symbols).

In some possible implementations, the TRS may be a TRS in two slots.

In this way, the synchronization precision can be improved, or the timing/frequency synchronization can be speeded (under a condition of a certain synchronization precision).

### 9. Exemplary illustration of an apparatus for determining an RS

The solutions of the embodiments of the disclosure are mainly described from a perspective of a method side. It may be understood that, in order to implement the foregoing functions, a terminal or a network device includes a hardware structure and/or a software module for implementing each function. A person skilled in the art may be easily aware that, in combination with units and algorithm steps in the examples in the embodiments of the disclosure, the disclosure can be implemented by hardware or a combination of hardware and computer software. Whether a certain function is executed in hardware or computer software driven hardware depends on specific applications and design constraint conditions of the technical solutions. A person skilled in the art may use different methods to implement the described functions for each particular application, but such implementation shall not be considered as going beyond the scope of the disclosure.

In the embodiments of the disclosure, division of functional modules of the terminal device or the network device may be implemented according to the foregoing method examples. For example, functional modules may be divided to correspond to respective functions, or two or more functions may be integrated into one processing module. The integrated module may be implemented in a form of hardware, or may be implemented in a form of software program module. It may be noted that, the division of modules in embodiments of the disclosure is illustrative and is only a division of logical functions, and other manners of division may also be available in practice.

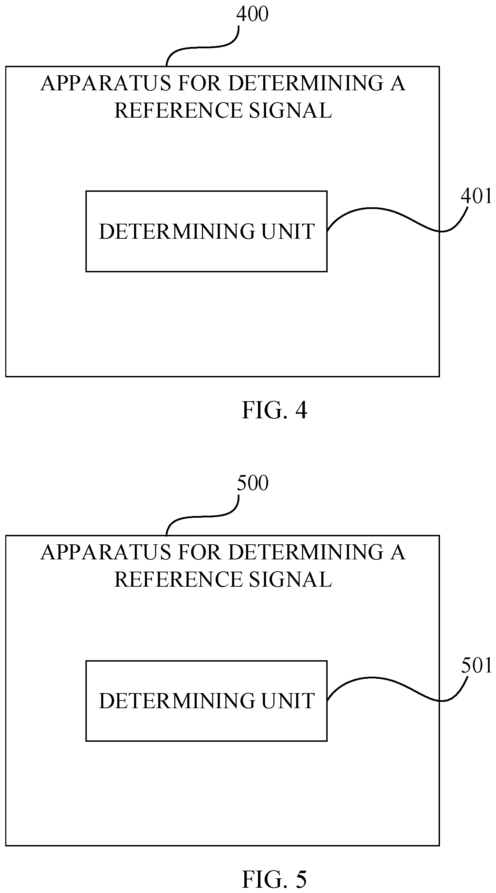

In the case where an integrated unit is used, FIG. 4 is a block diagram illustrating functional units of an apparatus for determining an RS according to embodiments of the disclosure. The apparatus 400 for determining an RS includes a determining unit 401.

It may be noted that, the determining unit 401 may be a module unit configured to process signals, data, information, and the like, which is not specifically limited herein.

The apparatus 400 for determining an RS may further include an obtaining unit. The obtaining unit may be a modular unit for transmitting and receiving signals, data, information, etc. In addition, the obtaining unit may be a communication unit, and the communication unit may be a communication interface, a transceiver, a transceiving circuit, and the like.

The apparatus 400 for determining an RS may further include a storage unit storing computer program codes or instructions executable by the apparatus 400 for determining an RS. The storage unit may be a memory.

In addition, it may be noted that the apparatus 400 for determining an RS may be a chip or a chip module.

The determining unit 401 may be integrated into one unit. For example, the determining unit 401 may be integrated into a processing unit. The processing unit may be a processor or a controller, and may be, for example, a baseband chip, a baseband processor, a central processing unit (CPU), a general processor, a digital signal processor (DSP), an application-specific integrated circuit (ASIC), a field programmable gate array (FPGA) or another programmable logic device, a transistor logic device, a hardware component, or any combination thereof. It may implement or perform various illustrative logical blocks, modules, and circuits described in connection with the disclosure. The processing unit may also be a combination that implements a computing function, for example, a combination that includes one or more microprocessors, a combination of a DSP and a microprocessor, and the like.

In a specific implementation, the determining unit 401 is configured to perform any step in the foregoing method embodiments, and when data transmission such as sending is performed, the determining unit 40 can optionally invoke the obtaining unit to complete a corresponding operation. Detailed illustration will be given below.

The determining unit 401 is configured to determine that an RS is valid according to a cell switch indication and/or an RS valid indication.

In may be seen that, in the embodiments of the disclosure, the apparatus 400 for determining an RS can determine that the RS is valid according to the cell switch indication and/or the RS valid indication, which is conducive to ensuring DL timing/frequency synchronization.

It may be seen that, the network device can send the cell switch indication to instruct the apparatus 400 for determining an RS to initiate RA in a non-anchor cell, and incidentally indicates that the RS is valid. Alternatively, the network device can send the cell switch indication to instruct the apparatus 400 for determining an RS to initiate RA in the non-anchor cell, and indicates that the RS is valid by means of the RS valid indication.

It may be noted that, for specific implementation of each operation in the embodiment illustrated in FIG. 4, reference may be made to the illustration in the foregoing method embodiments, and details are not described herein again.

In some possible implementations, the apparatus 400 for determining an RS may further include an obtaining unit configured to obtain the cell switch indication and/or the RS valid indication.

In some possible implementations, the cell switch indication or the RS valid indication is carried in a paging PDCCH.

In some possible implementations, the cell switch indication or the RS valid indication is carried in a paging message.

In some possible implementations, the cell switch indication or the RS valid indication is carried in one of: an RAR MAC and an RAR message.

In some possible implementations, the cell switch indication or the RS valid indication is a filed in message 4.

In some possible implementations, the cell switch indication or the RS valid indication is carried in an SIB.

In some possible implementations, the determining unit 401 is configured to determine that the RS is valid according to the cell switch indication or the RS valid indication, in a case where a first condition is satisfied, where the first condition includes one of the following: a WUS is detected, a PEI is detected, a PDCCH is detected, and a paging message is detected to contain its own identifier.

In some possible implementations, the case that the WUS is detected may include that: a signal corresponding to the WUS or a channel corresponding to the WUS is detected, or an indication in the signal corresponding to the WUS or in the channel corresponding to the WUS is detected.

In some possible implementations, the case that the PEI is detected may include that: a signal corresponding to the PEI or a channel corresponding to the PEI is detected, or an indication in the signal corresponding to the PEI or in the channel corresponding to the PEI.

In some possible implementations, the determining unit 401 is configured to determine that the RS is valid after a first delay, where the first delay is a switch time for the non-anchor cell.

In some possible implementations, the value of the first delay is cell switch time.

In some possible implementations, the value of the first delay is predefined or carried in an SIB.

In some possible implementations, the value of the first delay is carried in one of: a WUS, a PEI PDCCH, a paging PDCCH, a paging message, an RAR PDCCH, an RAR MAC CE, an RAR message, and message 4.

In some possible implementations, the determining unit 401 is configured to determine that the RS is valid after a second delay.

In some possible implementations, the second delay is terminal processing time.

In some possible implementations, the apparatus 400 for determining an RS further includes an initiating unit configured to initiate RA after a third delay, where the third delay is a maximum value between the first delay and the second delay, or the third delay is a sum of the first delay and the second delay.

In some possible implementations, the first delay is the cell switch time and the second delay is the terminal processing time.

In some possible implementations, the configuration of the RS is determined by a higher layer parameter.

In some possible implementations, the higher layer parameter is contained in signaling of a source cell.

In some possible implementations, the RS takes effect only once after the indication.

In some possible implementations, the RS is valid for a period of time.

In some possible implementations, the RS is one of an SSB, a TRS, and a Temp-RS.

In some possible implementations, the SSB has the same time domain location as a CD-SSB.

In some possible implementations, the RS includes a part of RSs in the SSB and the TRS.

In some possible implementations, a part of the RSs in the SSB are a PSS and/or an SSS.

In some possible implementations, the TRS is a TRS in one slot.

In some possible implementations, the TRS is a TRS in two slots.

### 10. Exemplary illustration of another apparatus for determining an RS

In the case where an integrated unit is used, FIG. 5 is a block diagram illustrating functional units of an apparatus for determining an RS according to embodiments of the disclosure. The apparatus 500 for determining an RS includes a determining unit 501.

It may be noted that, the determining unit 501 may be a modular unit configured to process signals, data, information, and the like, which is not specifically limited herein.

The apparatus 500 for determining an RS may further include an obtaining unit. The obtaining unit may be a modular unit for transmitting and receiving signals, data, information, etc. In addition, the obtaining unit may be a communication unit, and the communication unit may be a communication interface, a transceiver, a transceiving circuit, and the like.

The apparatus 500 for determining an RS may further include a storage unit storing computer program codes or instructions executable by the apparatus 500 for determining an RS. The storage unit may be a memory.

In addition, it may be noted that the apparatus 500 for determining an RS may be a chip or a chip module.

The determining unit 501 may be integrated into one unit. For example, the determining unit 501 may be integrated into a processing unit. The processing unit may be a processor or a controller, and may be, for example, a baseband chip, a baseband processor, a CPU, a general processor, a DSP, an ASIC, an FPGA or another programmable logic device, a transistor logic device, a hardware component, or any combination thereof. It may implement or perform various illustrative logical blocks, modules, and circuits described in connection with the disclosure. The processing unit may also be a combination that implements a computing function, for example, a combination that includes one or more microprocessors, a combination of a DSP and a microprocessor, and the like.

In a specific implementation, the determining unit 501 is configured to perform any step in the foregoing method embodiments, and when data transmission such as sending is performed, the determining unit 501 can optionally invoke the obtaining unit to complete a corresponding operation. Detailed illustration will be given below.

The determining unit 501 is configured to determine that an RS is valid according to a first indication.

In may be seen that, in the embodiments of the disclosure, the apparatus 500 for determining an RS can determine that the RS is valid according to the first indication, which is conducive to ensuring DL timing/frequency synchronization.

In some possible implementations, the apparatus 500 for determining an RS may further include the obtaining unit configured to obtain the first indication.

In some possible implementations, the first indication is at least one of: a cell switch indication, a UL switch indication, or an RS valid indication.

In this way, the network device can send the cell switch indication or the UL switch indication to instruct the apparatus 500 for determining an RS to send a PRACH in the non-anchor cell (the PRACH is sent to obtain UL synchronization with the non-anchor cell, so as to use UL resources in the non-anchor cell), and incidentally indicate the RS is valid (for faster DL synchronization). Alternatively, the network device can send the cell switch indication or the UL switch indication to instruct the apparatus 400 for determining an RS to initiate RA in the non-anchor cell, and indicate that the RS is valid by means of the RS valid indication.

It may be noted, for specific implementation of various operations in the embodiment in FIG. 5, reference can be made to the illustration in the above method embodiments, which will not be repeated herein.

In some possible implementations, the first indication is carried in a PDCCH.

In some possible implementations, the first indication is carried in a MAC CE.

In some possible implementations, the determining unit 501 configured to determine that an RS is valid is configured to determine that the RS is valid after a first delay, where the first delay is a switch time for the non-anchor cell.

In some possible implementations, the value of the first delay is cell switch time.

In some possible implementations, the value of the first delay is predefined or carried in an SIB.

In some possible implementations, the value of the first delay is carried in a PDCCH or a MAC CE.

In some possible implementations, the determining unit 501 is configured to determine that the RS is valid after a second delay.

In some possible implementations, the second delay is terminal processing time.

In some possible implementations, the apparatus 500 for determining an RS further includes an initiating unit configured to initiate RA after a third delay, where the third delay is a maximum value between the first delay and the second delay, or the third delay is a sum of the first delay and the second delay.

In some possible implementations, the configuration of the RS is determined by a higher layer parameter.

In some possible implementations, the higher layer parameter is contained in signaling of a source cell.

In some possible implementations, the RS takes effect only once after the indication.

In some possible implementations, the RS is valid for a period of time.

In some possible implementations, the RS is one of an SSB, a TRS, and a Temp-RS.

In some possible implementations, the SSB has the same time domain position as a CD-SSB.

In some possible implementations, the RS includes a part of RSs in the SSB and the TRS.

In some possible implementations, a part of the RSs in the SSB are a PSS and/or an SSS.

In some possible implementations, the TRS is a TRS in one slot.

In some possible implementations, the TRS is a TRS in two slots.

### 11. Exemplary illustration of a terminal

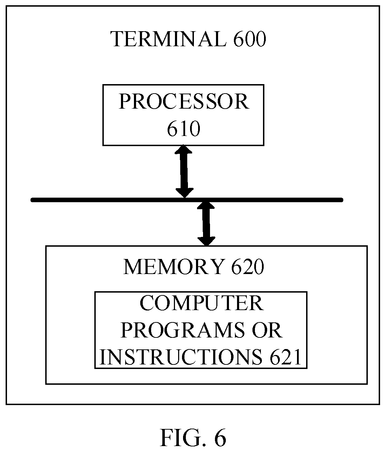

Referring to FIG. 6, FIG. 6 is a schematic structural diagram of a terminal device according to embodiments of the disclosure. The terminal 600 includes a processor 610, a memory 620, and a communication bus that is configured to connect the processor 610 and the memory 620.

The memory 620 includes, but is not limited to, a random access memory (RAM), a read-only memory (ROM), an erasable programmable read-only memory (EPROM), or a portable read-only memory (CD-ROM). The memory 620 is configured to store program codes executable by the terminal 600 and data to be transmitted by the terminal 600.

The terminal 600 may further include a communication interface for receiving and transmitting data.

The processor 610 may be one or more CPUs, and in a case where the processor 610 is a CPU, the CPU may be a single-core CPU or a multi-core CPU.

The processor 610 in the terminal 600 is configured to execute the computer program or instructions 621 stored in the memory 620 to perform the following operations: determining that an RS is valid according to the cell switch indication and/or the RS valid indication.

It may be seen that, the terminal 600 can determine that the RS is valid according to the cell switch indication and/or the RS valid indication, which is conducive to ensuring DL timing/frequency synchronization.

In this way, the cell switch indication is used to instruct the terminal to initiate RA in a cell, and incidentally indicates that the RS is valid. Alternatively, the cell switch indication is used to instruct the terminal 600 to initiate RA in a cell, and the RS valid indication is used to indicate that the RS is valid.

It may be noted that, for specific implementation of each operation, corresponding illustration of the foregoing method embodiments may be used, and the terminal 600 may be configured to execute the foregoing method embodiments of the disclosure, which is not described herein again.

### 12. Exemplary illustration of yet another terminal

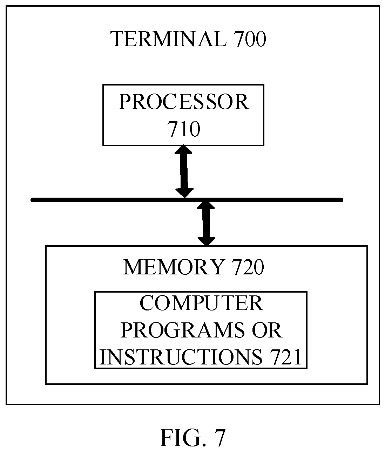

Referring to FIG. 7, FIG. 7 is a schematic structural diagram of a terminal according to embodiments of the disclosure. The terminal 700 includes a processor 710, a memory 720, and a communication bus that is configured to connect the processor 710 and the memory 720.

The memory 720 includes, but is not limited to, a RAM, a ROM, an EPROM, or a CD-ROM. The memory 720 is configured to store program codes executable by the terminal 700 and data to be transmitted by the terminal 700.

The terminal 700 may further include a communication interface for receiving and transmitting data.

The processor 710 may be one or more CPUs, and in a case where the processor 710 is a CPU, the CPU may be a single-core CPU or a multi-core CPU.

The processor 710 in the terminal 700 is configured to execute the computer program or instructions 721 stored in the memory 720 to perform the following operations: determine that an RS is valid according to the first indication.

It may be seen that, the terminal 700 can determine that the RS is valid according to the first indication, which is conducive to ensuring DL timing/frequency synchronization.

In some possible implementations, the first indication is at least one of a cell switch indication, a UL switch indication, and an RS valid indication

In this way, the cell switch indication or the UL switch indication may be used to instruct the terminal 700 to send a PRACH in a cell (the PRACH is sent to obtain UL synchronization with the cell, so as to use UL resources of the cell), and incidentally indicate that the RS is valid (for faster DL synchronization). Alternatively, the cell switch indication or the UL switch indication may be used to instruct the terminal 700 to initiate RA in a cell, and the RS valid indication is used to indicate that the RS is valid.

It may be noted that, specific implementation of each operation may use corresponding illustration of the foregoing method embodiments, and the terminal 700 may be configured to execute the foregoing method embodiments of the disclosure, which is not described herein again.

### 13. Other related exemplary illustrations

Embodiments of the disclosure further provide a chip, where the chip includes a processor, a memory, and computer programs or instructions stored in the memory. The processor is configured to execute the computer programs or instructions to implement steps described in the foregoing method embodiments.

Embodiments of the disclosure further provide a chip module, where the chip module includes a transceiver component and a chip. The chip includes a processor, a memory, and a computer program or instructions stored in the memory. The processor executes the computer program or instructions to implement steps described in the foregoing method embodiment.

Embodiments of the disclosure further provide a computer-readable storage medium. The computer-readable storage medium stores computer programs or instructions. When the computer programs or the instructions are executed, the steps described in the foregoing method embodiments are implemented.

Embodiments of the disclosure further provide a computer program product, where the computer program product includes computer programs or instructions. When the computer programs or instructions are executed, the steps described in the foregoing method embodiments are implemented.

It may be noted that, for the sake of simplicity, various method embodiments above are described as a series of action combinations. However, it will be appreciated by those skilled in the art that the disclosure is not limited by the sequence of actions described. According to embodiments of the disclosure, some steps may be performed in other orders or simultaneously. In addition, it will be appreciated by those skilled in the art that the embodiments described in the specification are preferable embodiments, and the actions, steps, modules, and units involved are not necessarily essential to the disclosure.

In the foregoing embodiments, illustration of each embodiment has its own emphasis. For the parts not described in detail in one embodiment, reference may be made to related illustrations in other embodiments.

Those skilled in the art will appreciate that, all or part of functions of the methods, steps, or related modules/unit described in the embodiments of the disclosure can be implemented through software, hardware, firmware, or any other combination thereof. When implemented by software, all or part of the functions can be implemented in the form of a computer program product. The computer program product includes at least one computer instruction. The computer program instructions may be composed by corresponding software modules. The software modules may be stored in a RAM, a flash memory, a ROM, an EPROM, an EEPROM, a register, a hardware disc, a mobile disc, a CD-ROM, or any other form of storage mediums known to those skilled in the art. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium, or a semiconductor medium (such as a solid state disk (SSD)), etc.

Each module/unit included in each device or product described in the foregoing embodiments may be a software module/unit, may be a hardware module/unit, may be a software module/unit in one part, and may be a hardware module/unit in another part. For example, with regard to various devices or products applied to or integrated into a chip, various modules/units included therein can all be realized by means of hardware, such as a circuit. Alternatively, some of the modules/units included therein may be implemented in the form of a software program running on a processor integrated within the chip, and some (if any) of the modules/units may be implemented in hardware such as circuitry. It can be learned by the same reasoning that each device or product is applied to or integrated with a chip module, or each device or product is applied to or integrated with a terminal.

The objectives, technical solutions, and beneficial effects of the embodiments of the disclosure are described in detail in the foregoing specific embodiments. It may be understood that the foregoing illustrations are merely specific implementations of the embodiments of the disclosure, but are not intended to limit the scope of protection of the embodiments of the disclosure. Any modifications, equivalent replacements, improvements and the like made on the basis of the technical solutions of the embodiments of the disclosure shall fall within the scope of protection of the embodiments of the disclosure.

## Claims

1. A method for determining a reference signal (RS), comprising:
determining that an RS is valid according to a cell switch indication and/or an RS valid indication.

2. The method of claim 1, wherein the cell switch indication or the RS valid indication is carried in a paging physical downlink control channel (PDCCH).

3. The method of claim 1, wherein the cell switch indication or the RS valid indication is carried in a paging message.

4. The method of claim 1, wherein the cell switch indication or the RS valid indication is carried in one of:
a random access response (RAR) medium access control control element (MAC CE) and a RAR message.

5. The method of claim 1, wherein the cell switch indication or the RS valid indication is carried in message 4.

6. The method of claim 1, wherein the cell switch indication or the RS valid indication is carried in a system information block (SIB).

7. The method of claim 1, wherein determining that the RS is valid according to the cell switch indication or the RS valid indication, comprises:
determining that the RS is valid according to the cell switch indication or the RS valid indication, in a case where a first condition is satisfied, wherein the first condition comprises one of the following: a wakeup signal (WUS) is detected, a paging early indication (PEI) is detected, a paging PDCCH is detected, and a paging message is detected to contain its own identifier.

8. The method of claim 7, wherein the case that the WUS is detected comprises: a signal corresponding to the WUS or a channel corresponding to the WUS is detected; or an indication in the signal corresponding to the WUS or in the channel corresponding to the WUS is detected.

9. The method of claim 7, wherein the case that the PEI is detected comprises: a signal corresponding to the PEI or a channel corresponding to the PEI is detected; or an indication in the signal corresponding to the PEI or in the channel corresponding to the PEI is detected.

10. The method of claim 1, wherein determining that the RS is valid, comprises:
determining that the RS is valid after a first delay.

11. The method of claim 10, wherein the first delay is cell switch time.

12. The method of claim 10, wherein a value of the first delay is predefined or carried in an SIB.

13. The method of claim 10, wherein a value of the first delay is carried in one of:
a WUS, a PEI PDCCH, a paging PDCCH, a paging message, an RAR PDCCH, an RAR MAC CE, an RAR message, and message 4.

14. The method of claim 1, wherein determining that the RS is valid, comprises:
determining that the RS is valid after a second delay.

15. The method of claim 14, wherein the second delay is terminal processing time.

16. The method of claim 1, further comprising:
initiating random access (RA) after a third delay, wherein the third delay is a maximum value between the first delay and the second delay, or the third delay is a sum of the first delay and the second delay.

17. The method of claim 1, wherein the configuration of the RS is determined by a higher layer parameter.

18. The method of claim 17, wherein the higher layer parameter is contained in signaling of a source cell.

19. The method of claim 1, wherein the RS takes effect only once after indication.

20. The method of claim 19, wherein the RS is valid within a period of time.

21. The method of claim 1, wherein the RS comprises one of: a synchronization signal/physical broadcast channel (PBCH) block (SSB), a tracking reference signal (TRS), or a temporary reference signal (Temp-RS).

22. The method of claim 21, wherein the SSB and a cell defining SSB (CD-SSB) have a same time-domain position.

23. The method of claim 1, wherein the RS comprises a part of RSs in an SSB and a TRS.

24. The method of claim 23, wherein the part of the RSs in the SSB comprises a primary synchronization signal (PSS) and/or a secondary synchronization signal (SSS).

25. The method of claim 23, wherein the TRS is a TRS in one or two slots.

26. A method for determining a reference signal (RS), comprising:
determining that an RS is valid according to a first indication.

27. The method of claim 26, wherein the first indication is carried by a paging physical downlink control channel (PDCCH).

28. The method of claim 26, wherein the first indication is carried in a medium access control control element (MAC CE).

29. The method of claim 26, wherein determining that the RS is valid, comprises:
determining that the RS is valid after a first delay.

30. The method of claim 29, wherein the first delay is cell switch time.

31. The method of claim 29, wherein a value of the first delay is predefined or carried in a system information block (SIB).

32. The method of claim 29, wherein a value of the first delay is carried in a PDCCH or a MAC CE.

33. The method of claim 26, wherein determining that the RS is valid, comprises:
determining that the RS is valid after a second delay.

34. The method of claim 33, wherein the second delay is terminal processing time.

35. The method of claim 26, further comprising:
initiating random access (RA) after a third delay, wherein the third delay is a maximum value between the first delay and the second delay, or the third delay is a sum of the first delay and the second delay.

36. The method of claim 26, wherein configuration of the RS is determined by a higher layer parameter.

37. The method of claim 36, wherein the higher layer parameter is contained in signaling of a source cell.

38. The method of claim 26, wherein the RS takes effect only once after indication.

39. The method of claim 38, wherein the RS is valid within a period of time.

40. The method of claim 26, wherein the RS comprises one of: a synchronization signal/physical broadcast channel (PBCH) block (SSB), a tracking reference signal (TRS), or a temporary reference signal (Temp-RS).

41. The method of claim 40, wherein the SSB and a cell defining SSB (CD-SSB) have a same time-domain position.

42. The method of claim 26, wherein the RS comprises a part of RSs in an SSB and a TRS.

43. The method of claim 42, wherein the part of the RSs in the SSB comprises a primary synchronization signal (PSS) and/or a secondary synchronization signal (SSS).

44. The method of claim 42, wherein the TRS is a TRS in one or two slots.

45. An apparatus for determining a reference signal (RS), comprising:
a determining unit configured to determine that an RS is valid according to a cell switch indication and/or an RS valid indication.

46. The apparatus of claim 45, wherein the cell switch indication or the RS valid indication is carried in a paging physical downlink control channel (PDCCH).

47. The apparatus of claim 45, wherein the cell switch indication or the RS valid indication is carried in a paging message.

48. The apparatus of claim 45, wherein the cell switch indication or the RS valid indication is carried in one of:
a random access response (RAR) medium access control control element (MAC CE) and a RAR message.

49. The apparatus of claim 45, wherein the cell switch indication or the RS valid indication is carried in message 4.

50. The apparatus of claim 45, wherein the cell switch indication or the RS valid indication is carried in a system information block (SIB).

51. The apparatus of claim 45, wherein the determining unit configured to determine that the RS is valid according to the cell switch indication and/or the RS valid indication is configured to:
determine that the RS is valid according to the cell switch indication and/or the RS valid indication, in a case where a first condition is satisfied, wherein the first condition comprises one of the following: a wakeup signal (WUS) is detected, a paging early indication (PEI) is detected, a paging PDCCH is detected, and a paging message is detected to contain its own identifier.

52. The apparatus of claim 51, wherein the case that the WUS is detected comprises: a signal corresponding to the WUS or a channel corresponding to the WUS is detected; or an indication in the signal corresponding to the WUS or in the channel corresponding to the WUS is detected.

53. The apparatus of claim 51, wherein the case that the PEI is detected comprises: a signal corresponding to the PEI or a channel corresponding to the PEI is detected; or an indication in the signal corresponding to the PEI or in the channel corresponding to the PEI is detected.

54. The apparatus of claim 45, wherein determining that the RS is valid, comprises:
determining that the RS is valid after a first delay.

55. The apparatus of claim 54, wherein the first delay is cell switch time.

56. The apparatus of claim 54, wherein a value of the first delay is predefined or carried in a system information block (SIB).

57. The apparatus of claim 54, wherein a value of the first delay is carried in one of:
a WUS, a PEI PDCCH, a paging PDCCH, a paging message, an RAR PDCCH, an RAR MAC CE, an RAR message, and message 4.

58. The apparatus of claim 45, wherein determining that the RS is valid, comprises:
determining that the RS is valid after a second delay.

59. The apparatus of claim 58, wherein the second delay is terminal processing time.

60. The apparatus of claim 45, wherein the apparatus further comprises a sending unit configured to:
initiate random access (RA) after a third delay, wherein the third delay is a maximum value between the first delay and the second delay, or the third delay is a sum of the first delay and the second delay.

61. The apparatus of claim 45, wherein configuration of the RS is determined by a higher layer parameter.

62. The apparatus of claim 61, wherein the higher layer parameter is contained in signaling of a source cell.

63. The apparatus of claim 45, wherein the RS takes effect only once after indication.

64. The apparatus of claim 63, wherein the RS is valid within a period of time.

65. The apparatus of claim 45, wherein the RS comprises one of: a synchronization signal/physical broadcast channel (PBCH) block (SSB), a tracking reference signal (TRS), or a temporary reference signal (Temp-RS).

66. The apparatus of claim 65, wherein the SSB and a cell defining SSB (CD-SSB) have a same time-domain position.

67. The apparatus of claim 45, wherein the RS comprises a part of RSs in an SSB and a TRS.

68. The apparatus of claim 67, wherein the part of the RSs in the SSB comprises a primary synchronization signal (PSS) and/or a secondary synchronization signal (SSS).

69. The apparatus of claim 67, wherein the TRS is a TRS in one or two slots.

70. An apparatus for determining a reference signal (RS), comprising:
a determining unit configured to determine that an RS is valid according to a first indication.

71. The apparatus of claim 70, wherein the first indication is carried in a paging physical downlink control channel (PDCCH).

72. The apparatus of claim 70, wherein the first indication is carried in a medium access control control element (MAC CE).

73. The apparatus of claim 70, wherein determining that the RS is valid, comprises:
determining that the RS is valid after a first delay.

74. The apparatus of claim 73, wherein the first delay is cell switch time.

75. The apparatus of claim 73, wherein a value of the first delay is predefined or carried in a system information block (SIB).

76. The apparatus of claim 73, wherein a value of the first delay is carried in a PDCCH or a MAC CE.

77. The apparatus of claim 70, wherein determining that the RS is valid, comprises:
determining that the RS is valid after a second delay.

78. The apparatus of claim 77, wherein the second delay is terminal processing time.

79. The apparatus of claim 70, further comprising an initiating unit configured to:
initiate random access (RA) after a third delay, wherein the third delay is a maximum value between the first delay and the second delay, or the third delay is a sum of the first delay and the second delay.

80. The apparatus of claim 70, wherein configuration of the RS is determined by a higher layer parameter.

81. The apparatus of claim 80, wherein the higher layer parameter is contained in signaling of a source cell.

82. The apparatus of claim 70, wherein the RS takes effect only once after indication.

83. The apparatus of claim 82, wherein the RS is valid within a period of time.

84. The apparatus of claim 70, wherein the RS comprises one of: a synchronization signal/physical broadcast channel (PBCH) block (SSB), a tracking reference signal (TRS), or a temporary reference signal (Temp-RS).

85. The apparatus of claim 84, wherein the SSB and a cell defining SSB (CD-SSB) have a same time-domain position.

86. The apparatus of claim 70, wherein the RS comprises a part of RSs in an SSB and a TRS.

87. The apparatus of claim 86, wherein the part of the RSs in the SSB comprises a primary synchronization signal (PSS) and/or a secondary synchronization signal (SSS).

88. The apparatus of claim 86, wherein the TRS is a TRS in one or two slots.

89. A terminal comprising a processor, a memory, and computer programs or instructions stored in the memory, wherein the processor is configured to execute the computer programs or the instructions to implement the steps of the method of any one of claims 1 to 25 or 26-44.

90. A computer-readable storage medium storing computer programs or instructions, the computer programs or instructions being executed to implement the steps of the method of any one of claims 1 to 25 or 26-44.

91. A chip comprising a processor configured to execute the steps of the method of any one of claims 1 to 25 or 26-44.
